# EUROPEAN PATENT APPLICATION

(11) **EP 4 729 560 A1**
(43) Date of publication of application: **22.04.2026**
(21) Application number: 25832672.7
(22) Date of filing: 21.05.2025
(51) Int. Cl.: C08G 65/12, C08G 18/48, C08G 65/329, C08G 65/336

(54) **COMPOSITE METAL CYANIDE COMPLEX CATALYST, METHOD FOR PRODUCING POLYETHER COMPOUND, METHOD FOR PRODUCING POLYETHER COMPOUND HAVING REACTIVE SILICON GROUP, METHOD FOR PRODUCING POLYETHER COMPOUND HAVING URETHANE BOND, AND METHOD FOR PRODUCING POLYETHER COMPOUND HAVING POLYMERIZABLE UNSATURATED GROUP**

(30) Priority: 05.07.2024 JP 2024109224; 05.07.2024 JP 2024109225; 05.07.2024 JP 2024109226; 05.07.2024 JP 2024109231
(71) Applicant: AGC INC., Chiyoda-ku, Tokyo 1008405 (JP)
(72) Inventor: ITO, Takashi, Tokyo 100-8405 (JP); SUZUKI, Tomoyuki, Tokyo 100-8405 (JP); HAYASHI, Tomohiro, Tokyo 100-8405 (JP); YAMADA, Kazuhiko, Tokyo 100-8405 (JP)
(74) Representative: Müller-Boré & Partner Patentanwälte PartG mbB
(86) International application number: PCT/JP2025/018419
(87) International publication number: WO 2026/009590

(57) **Abstract**

The present invention pertains to a double metal cyanide complex catalyst in a form of particles, wherein a 50% cumulative volume particle diameter determined from a cumulative volumetric particle size distribution obtained by a laser diffraction scattering method in the double metal cyanide complex catalyst is from 0.01 to 4.0 µm, and a content of the particles having a particle diameter of 11 µm or more with respect to the total volume of the double metal cyanide complex catalyst is 10% by volume or less.

## Description

### BACKGROUND OF THE INVENTION

### Field of the Invention

The present invention relates to a double metal cyanide complex catalyst (composite metal cyanide complex catalyst), a method for producing a polyether compound, a method for producing a polyether compound having a reactive silicon group, a method for producing a polyether compound having a urethane bond, and a method for producing a polyether compound having a polymerizable unsaturated group.

Priority is claimed on Japanese Patent Application No. 2024-109224, Japanese Patent Application No. 2024-109226, Japanese Patent Application No. 2024-109231, and Japanese Patent Application No. 2024-109225, filed July 5, 2024, the contents of which are incorporated herein by reference.

### Description of the Related Art

A polyether compound is used as a raw material for adhesives, paint, sealants, coatings, and the like. A polyether compound is produced by polymerizing an alkylene oxide with an initiator having active hydrogen. A double metal cyanide complex catalyst has been known as a polymerization catalyst for obtaining a polyether compound with a narrow molecular weight distribution.

Patent Document 1 discloses a method for producing a double metal cyanide complex catalyst, which includes a step of bringing an aqueous solution of a metal halide compound into contact with an aqueous solution of a transition metal cyanide compound in a laminar flow state to obtain a liquid containing a double metal cyanide complex, and a step of mixing the liquid containing the double metal cyanide complex with an organic ligand to obtain a dispersion liquid containing a double metal cyanide complex catalyst having an organic ligand. It is disclosed that the double metal cyanide complex catalyst produced by the above production method has a specific surface area by the BET method of 20 to 150 m²/g, and a volume of pores of 3 nm or less by the DFT method based on the specific surface area of 0.05 × 10⁻³ to 10 × 10⁻³ cc/g.

It has been known that a polyether compound having a reactive silicon group has a property to crosslink even at room temperature through the formation of siloxane bonds accompanied by a hydrolysis reaction and the like of the reactive silicon group due to hygroscopic moisture or the like, thereby obtaining a rubber-like cured product. Therefore, polyether compounds having reactive silicon groups have already been industrially produced and are widely used in applications such as sealing materials and adhesives.

A polyether compound having a reactive silicon group is produced using a polyether compound having a hydroxyl group as a raw material. A polyether compound having a hydroxyl group is produced by polymerizing an alkylene oxide with an initiator having active hydrogen. A double metal cyanide complex catalyst has been known as a polymerization catalyst for obtaining a polyether compound with a narrow molecular weight distribution.

Patent Document 2 discloses an oxyalkylene polymer having a urethane bond and an alkoxysilyl group, which is obtained by a urethane reaction between a polymer having a polyoxyalkylene chain and a hydroxy group and a compound having an alkoxysilyl group and an isocyanate group. Furthermore, it is also described that the above polymer having a polyoxyalkylene chain and a hydroxy group can be obtained by ring-opening polymerization of an alkylene oxide with a compound having an active hydrogen atom in the presence of a double metal cyanide complex catalyst.

A polyether compound having a urethane bond, such as a urethane prepolymer, is used as a raw material for adhesives, paint, sealants, coatings, and the like. A polyether compound having a urethane bond is produced using a polyether compound having a hydroxyl group as a raw material. A polyether compound having a hydroxyl group is produced by polymerizing an alkylene oxide with an initiator having active hydrogen. A double metal cyanide complex catalyst has been known as a polymerization catalyst for obtaining a polyether compound with a narrow molecular weight distribution.

Patent Document 3 discloses a urethane prepolymer composition (G) containing a urethane prepolymer (E) having a hydroxyl group terminal and a polyalkylene oxide (B). In addition, it is disclosed that the urethane prepolymer (E) is a reaction product of polyol and polyisocyanate (C) and has at least one urethane group and at least one hydroxyl group within one molecule. Furthermore, it is also disclosed that the polyol can be produced by a double metal cyanide complex catalyst.

A polyether compound having a polymerizable unsaturated group is used as optical component materials, and raw materials for pressure-sensitive adhesives, adhesives, paint, sealants, coatings, and the like in the fields of liquid crystal panels, and the like. A polyether compound having a polymerizable unsaturated group is produced using a polyether compound having a hydroxyl group as a raw material. A polyether compound having a hydroxyl group is produced by polymerizing an alkylene oxide with an initiator having active hydrogen. A double metal cyanide complex catalyst has been known as a polymerization catalyst for obtaining a polyether compound with a narrow molecular weight distribution.

Patent Document 4 discloses a method for producing an oligomer having a polyoxyalkylene chain, a group having a urethane bond derived from an isocyanate group-containing compound, and an acryloyloxy group by: obtaining polyoxypropylene diol by polymerizing propylene oxide with an initiator, in the presence of a double metal cyanide complex catalyst; reacting the obtained polyoxypropylene diol with isophorone diisocyanate to obtain an isocyanate-terminated urethane prepolymer; and reacting the obtained isocyanate-terminated urethane prepolymer with 2-hydroxyethyl acrylate.

### PRIOR ART DOCUMENTS

### [Patent Documents]

[Patent Document 1] Japanese Patent No. 5109093
[Patent Document 2] Japanese Patent No. 5521326
[Patent Document 3] Japanese Unexamined Patent Application, First Publication No. 2023-155601
[Patent Document 4] Japanese Patent No. 7255604

### SUMMARY OF THE INVENTION

### Problems to be Solved by the Invention

When a polyether compound is used for applications such as the above-mentioned adhesives and coatings, solid impurities in the polyether compound may cause problems. Therefore, after the production of the polyether compound, purification by filtration in order to remove impurities may be performed. When the inventors of the present application produced a polyether compound using the double metal cyanide complex catalyst described in Patent Document 1 and purified it by filtration, they found that there were problems of slow filtration rate and occurrence of clogging.

When a polyether compound having a reactive silicon group is used for applications such as the above-mentioned sealing materials, adhesives, and paint, solid impurities in the polyether compound having a reactive silicon group may cause problems. Therefore, after the production of the polyether compound having a reactive silicon group, purification by filtration in order to remove impurities may be performed. When a polyether compound having a reactive silicon group (an oxyalkylene polymer having a urethane bond and an alkoxysilyl group) is produced by the production method described in Patent Document 1 using a polyol (a polymer having a polyoxyalkylene chain and a hydroxy group) produced using a double metal cyanide complex catalyst and purified by filtration, there is a problem of slow filtration rate, thereby causing clogging.

Further, when a polyether compound having a reactive silicon group is used for applications such as the above-mentioned sealing materials and adhesives, stretch durability is required, but the stretch durability of the cured product obtained from the polyether compound having a reactive silicon group produced by the production method described in Patent Document 2 is not sufficient.

When a polyether compound having a urethane bond is used for applications such as the above-mentioned adhesives, paint, sealing materials, and coatings, solid impurities in the polyether compound having a urethane bond may cause problems. Therefore, after the production of the polyether compound having a urethane bond, purification by filtration in order to remove impurities may be performed. When a urethane prepolymer (a polyether compound having a urethane bond) is produced by the production method described in Patent Document 3 using a polyol produced using a double metal cyanide complex catalyst and purified by filtration, there is a problem of slow filtration rate, thereby causing clogging.

When a polyether compound having a polymerizable unsaturated group is used for applications such as the above-mentioned pressure-sensitive adhesives, adhesives, paint, sealing materials, and coatings, solid impurities in the polyether compound having a polymerizable unsaturated group may cause problems. Therefore, after the production of the polyether compound having a polymerizable unsaturated group, purification by filtration in order to remove impurities may be performed. When an oligomer having a polyoxyalkylene chain, a group having a urethane bond derived from an isocyanate group-containing compound, and an acryloyloxy group (a polyether compound having a polymerizable unsaturated group) is produced by the production method described in Patent Document 4 and purified by filtration, there is a problem of slow filtration rate, thereby causing clogging.

The present invention has been made in consideration of the above circumstances, and has an object of providing a double metal cyanide complex catalyst that can improve filterability in a purification step of a polyether compound, and a method for producing a polyether compound using the double metal cyanide complex catalyst.

The present invention also has an object of providing a method for producing a polyether compound having a reactive silicon group that provides excellent stretch durability of a cured product and can improve filterability in a purification step.

The present invention also has an object of providing a method for producing a polyether compound having a urethane bond that can improve filterability in a purification step.

The present invention also has an object of providing a method for producing a polyether compound having a polymerizable unsaturated group that can improve filterability in a purification step.

### Means for Solving the Problem

The present invention provides the following means.
[1] A double metal cyanide complex catalyst in a form of particles, wherein a 50% cumulative volume particle diameter in the aforementioned double metal cyanide complex catalyst determined from a volume-based cumulative particle size distribution obtained by a laser diffraction scattering method is from 0.01 to 4.0 µm, and a content of the aforementioned particles having a particle diameter of 11 µm or more with respect to a total volume of the aforementioned double metal cyanide complex catalyst is 10% by volume or less.
[2] A double metal cyanide complex catalyst in a form of particles, wherein a 50% cumulative volume particle diameter D₅₀ in the aforementioned double metal cyanide complex catalyst determined from a volume-based cumulative particle size distribution obtained by a laser diffraction scattering method is from 0.01 to 4.0 µm; a content of the aforementioned particles having a particle diameter of 11 µm or more with respect to a total volume of the aforementioned double metal cyanide complex catalyst is 10% by volume or less; and (D₉₀ - D₁₀)/D₅₀ is from 1.05 to 1.50, where D₁₀ is a 10% cumulative volume particle diameter and D₉₀ is a 90% cumulative volume particle diameter determined from the aforementioned volume-based cumulative particle size distribution.
[3] The double metal cyanide complex catalyst according to [1] or [2], wherein the content of the aforementioned particles having a particle diameter of 11 µm or more with respect to the total volume of the aforementioned double metal cyanide complex catalyst is 5% by volume or less.
[4] A method for producing a polyether compound, the method including polymerizing an alkylene oxide with an initiator having active hydrogen in the presence of the double metal cyanide complex catalyst according to any one of [1] to [3].
[5] The method for producing a polyether compound according to [4], wherein a number average molecular weight of the aforementioned polyether compound is from 500 to 100,000.
[6] The method for producing a polyether compound according to [4] or [5], wherein a molecular weight distribution of the aforementioned polyether compound is from 1.00 to 1.15.
[7] The method for producing a polyether compound according to any one of [4] to [6], wherein a total degree of unsaturation of the aforementioned polyether compound is from 0.001 to 0.040 meq/g.
[8] The method for producing a polyether compound according to any one of [4] to [7], wherein an amount of the aforementioned double metal cyanide complex catalyst used with respect to a total mass of the aforementioned polyether compound is from 1 to 200 ppm by mass.

[1A] A method for producing a polyether compound having a reactive silicon group, the method including polymerizing an initiator having active hydrogen with an alkylene oxide in the presence of a double metal cyanide complex catalyst to obtain a composition containing a polyether compound having a hydroxyl group, and converting the aforementioned hydroxyl group of the aforementioned polyether compound having a hydroxyl group in the aforementioned composition into a group having a reactive silicon group represented by the following Formula 1, wherein the aforementioned double metal cyanide complex catalyst is in a form of particles, a 50% cumulative volume particle diameter in the aforementioned double metal cyanide complex catalyst determined from a volume-based cumulative particle size distribution obtained by a laser diffraction scattering method is from 0.01 to 4.0 µm, and a content of the aforementioned particles having a particle diameter of 11 µm or more with respect to a total volume of the aforementioned double metal cyanide complex catalyst is 10% by volume or less.

-SiRₐX₃₋ₐ Formula 1

In the above Formula 1, R is a monovalent organic group having 1 to 20 carbon atoms and represents an organic group other than a hydrolyzable group, and X represents a hydroxyl group, a halogen atom, or a hydrolyzable group. a is an integer from 0 to 2. When a is 2, R groups may be the same as or different from each other, and when a is 0 or 1, X groups may be the same as or different from each other.

[2A] A method for producing a polyether compound having a reactive silicon group, the method including polymerizing an initiator having active hydrogen with an alkylene oxide in the presence of a double metal cyanide complex catalyst to obtain a composition containing a polyether compound having a hydroxyl group, and converting the aforementioned hydroxyl group of the aforementioned polyether compound having a hydroxyl group in the aforementioned composition into a group having a reactive silicon group represented by the following Formula 1, wherein the aforementioned double metal cyanide complex catalyst is in a form of particles; a 50% cumulative volume particle diameter D₅₀ in the aforementioned double metal cyanide complex catalyst determined from a volume-based cumulative particle size distribution obtained by a laser diffraction scattering method, is from 0.01 to 4.0 µm; a content of the aforementioned particles having a particle diameter of 11 µm or more with respect to a total volume of the aforementioned double metal cyanide complex catalyst is 10% by volume or less; and (D₉₀ - D₁₀)/D₅₀ is from 1.05 to 1.50, where D₁₀ is a 10% cumulative volume particle diameter and D₉₀ is a 90% cumulative volume particle diameter determined from the aforementioned volume-based cumulative particle size distribution.

-SiRₐX₃₋ₐ Formula 1

In the above Formula 1, R is a monovalent organic group having 1 to 20 carbon atoms and represents an organic group other than a hydrolyzable group, and X represents a hydroxyl group, a halogen atom, or a hydrolyzable group. a is an integer from 0 to 2. When a is 2, R groups may be the same as or different from each other, and when a is 0 or 1, X groups may be the same as or different from each other.

[3A] The method for producing a polyether compound having a reactive silicon group according to [1A] or [2A], wherein the content of the aforementioned particles having a particle diameter of 11 µm or more with respect to the total volume of the aforementioned double metal cyanide complex catalyst is 5% by volume or less.

[4A] The method for producing a polyether compound having a reactive silicon group according to any one of [1A] to [3A], wherein a number average molecular weight of the aforementioned polyether compound having a hydroxyl group is from 500 to 100,000.

[5A] The method for producing a polyether compound having a reactive silicon group according to any one of [1A] to [4A], wherein a molecular weight distribution of the aforementioned polyether compound having a hydroxyl group is from 1.00 to 1.15.

[6A] The method for producing a polyether compound having a reactive silicon group according to any one of [1A] to [5A], wherein a total degree of unsaturation of the aforementioned polyether compound having a hydroxyl group is from 0.001 to 0.040 meq/g.

[7A] The method for producing a polyether compound having a reactive silicon group according to any one of [1A] to [6A], wherein an amount of the aforementioned double metal cyanide complex catalyst used with respect to a total mass of the aforementioned polyether compound having a hydroxyl group is from 1 to 200 ppm by mass.

[1B] A method for producing a polyether compound having a urethane bond, the method including polymerizing an initiator having active hydrogen with an alkylene oxide in the presence of a double metal cyanide complex catalyst, and reacting an obtained composition containing a polyether compound having a hydroxyl group with a polyisocyanate, wherein the aforementioned double metal cyanide complex catalyst is in a form of particles, a 50% cumulative volume particle diameter in the aforementioned double metal cyanide complex catalyst determined from a volume-based cumulative particle size distribution obtained by a laser diffraction scattering method is from 0.01 to 4.0 µm, and a content of the aforementioned particles having a particle diameter of 11 µm or more with respect to a total volume of the aforementioned double metal cyanide complex catalyst is 10% by volume or less.

[2B] A method for producing a polyether compound having a urethane bond, the method including polymerizing an initiator having active hydrogen with an alkylene oxide in the presence of a double metal cyanide complex catalyst, and reacting an obtained composition containing a polyether compound having a hydroxyl group with a polyisocyanate, wherein the aforementioned double metal cyanide complex catalyst is in a form of particles; a 50% cumulative volume particle diameter D₅₀ in the aforementioned double metal cyanide complex catalyst determined from a volume-based cumulative particle size distribution obtained by a laser diffraction scattering method, is from 0.01 to 4.0 µm; a content of the aforementioned particles having a particle diameter of 11 µm or more with respect to a total volume of the aforementioned double metal cyanide complex catalyst is 10% by volume or less; and (D₉₀ - D₁₀)/D₅₀ is from 1.05 to 1.50, where D₁₀ is a 10% cumulative volume particle diameter and D₉₀ is a 90% cumulative volume particle diameter determined from the aforementioned volume-based cumulative particle size distribution.

[3B] The method for producing a polyether compound having a urethane bond according to [1B] or [2B], wherein the content of the aforementioned particles having a particle diameter of 11 µm or more with respect to the total volume of the aforementioned double metal cyanide complex catalyst is 5% by volume or less.

[4B] The method for producing a polyether compound having a urethane bond according to any one of [1B] to [3B], wherein a number average molecular weight of the aforementioned polyether compound having a hydroxyl group is from 500 to 100,000.

[5B] The method for producing a polyether compound having a urethane bond according to any one of [1B] to [4B], wherein a molecular weight distribution of the aforementioned polyether compound having a hydroxyl group is from 1.00 to 1.15.

[6B] The method for producing a polyether compound having a urethane bond according to any one of [1B] to [5B], wherein a total degree of unsaturation of the aforementioned polyether compound having a hydroxyl group is from 0.001 to 0.040 meq/g.

[7B] The method for producing a polyether compound having a urethane bond according to any one of [1B] to [6B], wherein an amount of the aforementioned double metal cyanide complex catalyst used with respect to a total mass of the aforementioned polyether compound having a hydroxyl group is from 1 to 200 ppm by mass.

[1C] A method for producing a polyether compound having a polymerizable unsaturated group, the method including polymerizing an initiator having active hydrogen with an alkylene oxide in the presence of a double metal cyanide complex catalyst to obtain a composition containing a polyether compound having a hydroxyl group, and converting the aforementioned hydroxyl group of the aforementioned polyether compound having a hydroxyl group in the aforementioned composition into a group having a polymerizable unsaturated group, wherein the aforementioned double metal cyanide complex catalyst is in a form of particles, a 50% cumulative volume particle diameter in the aforementioned double metal cyanide complex catalyst determined from a volume-based cumulative particle size distribution obtained by a laser diffraction scattering method is from 0.01 to 4.0 µm, and a content of the aforementioned particles having a particle diameter of 11 µm or more with respect to a total volume of the aforementioned double metal cyanide complex catalyst is 10% by volume or less.

[2C] A method for producing a polyether compound having a polymerizable unsaturated group, the method including polymerizing an initiator having active hydrogen with an alkylene oxide in the presence of a double metal cyanide complex catalyst to obtain a composition containing a polyether compound having a hydroxyl group, and converting the aforementioned hydroxyl group of the aforementioned polyether compound having a hydroxyl group in the aforementioned composition into a group having a polymerizable unsaturated group, wherein the aforementioned double metal cyanide complex catalyst is in a form of particles; a 50% cumulative volume particle diameter D₅₀ in the aforementioned double metal cyanide complex catalyst determined from a volume-based cumulative particle size distribution obtained by a laser diffraction scattering method, is from 0.01 to 4.0 µm; a content of the aforementioned particles having a particle diameter of 11 µm or more with respect to a total volume of the aforementioned double metal cyanide complex catalyst is 10% by volume or less; and (D₉₀ - D₁₀)/D₅₀ is from 1.05 to 1.50, where D₁₀ is a 10% cumulative volume particle diameter and D₉₀ is a 90% cumulative volume particle diameter determined from the aforementioned volume-based cumulative particle size distribution.

[3C] The method for producing a polyether compound having a polymerizable unsaturated group according to [1C] or [2C], wherein the content of the aforementioned particles having a particle diameter of 11 µm or more with respect to the total volume of the aforementioned double metal cyanide complex catalyst is 5% by volume or less.

[4C] The method for producing a polyether compound having a polymerizable unsaturated group according to any one of [1C] to [3C], wherein a number average molecular weight of the aforementioned polyether compound having a hydroxyl group is from 500 to 100,000.

[5C] The method for producing a polyether compound having a polymerizable unsaturated group according to any one of [1C] to [4C], wherein a molecular weight distribution of the aforementioned polyether compound having a hydroxyl group is from 1.00 to 1.15.

[6C] The method for producing a polyether compound having a polymerizable unsaturated group according to any one of [1C] to [5C], wherein a total degree of unsaturation of the aforementioned polyether compound having a hydroxyl group is from 0.001 to 0.040 meq/g.

[7C] The method for producing a polyether compound having a polymerizable unsaturated group according to any one of [1C] to [6C], wherein an amount of the aforementioned double metal cyanide complex catalyst used with respect to a total mass of the aforementioned polyether compound having a hydroxyl group is from 1 to 200 ppm by mass.

### Effects of the Invention

According to the present invention, it is possible to provide a double metal cyanide complex catalyst that can improve filterability in a purification step of a polyether compound, and a method for producing a polyether compound using the double metal cyanide complex catalyst.

According to the present invention, it is also possible to provide a method for producing a polyether compound having a reactive silicon group, which has excellent stretch durability of a cured product and can improve the filterability in a purification step.

According to the present invention, it is also possible to provide a method for producing a polyether compound having a urethane bond, which can improve the filterability in a purification step.

According to the present invention, it is also possible to provide a method for producing a polyether compound having a polymerizable unsaturated group, which can improve the filterability in a purification step.

### DETAILED DESCRIPTION OF THE INVENTION

The meanings and definitions of the terms used in the present specification are as follows.

A numerical range represented by a symbol "-" means a numerical range in which numerical values before and after this symbol "-" are the lower limit and upper limit values.

The particle size distribution of particles of a double metal cyanide complex catalyst can be determined by a laser diffraction scattering method. Hereinafter, an X% cumulative volume particle diameter determined from a cumulative particle size distribution based on volume (volume-based cumulative particle size distribution) obtained by the laser diffraction scattering method is also represented as D_{X}. D_{X} represents a particle diameter obtained by accumulation up to a specific X% of the total volume of the particle size distribution obtained by the laser diffraction scattering method, which is taken as 100%.

The particle size distribution in a reaction liquid (composition) after producing a polyether compound can also be determined by dynamic light scattering particle size distribution measurement. Hereinafter, an X% cumulative volume particle diameter determined from a volume-based cumulative particle size distribution obtained by the dynamic light scattering measurement of particle size distribution is also represented as d_{X}. d_{X} represents a particle diameter obtained by accumulation up to a specific X% of the total volume of the particle size distribution obtained by the dynamic light scattering measurement of particle size distribution, which is taken as 100%. In addition, an X% cumulative light intensity particle diameter determined from a cumulative particle size distribution based on light intensity (light intensity-based cumulative particle size distribution) within a range of 0.1 to 6.5 µm obtained by the dynamic light scattering measurement of particle size distribution is also represented as d_{X}'. d_{X}' represents a particle diameter obtained by accumulation up to a specific X% of the total light intensity of the particle size distribution within a range of 0.1 to 6.5 µm obtained by the dynamic light scattering particle size distribution measurement, which is taken as 100%.

A "polyether compound" means a polyether compound having a hydroxyl group. A "polyether compound" does not have a reactive silicon group, a urethane bond, a polymerizable unsaturated group, or an isocyanate group.

A "polyether compound having a reactive silicon group" has a reactive silicon group. A "polyether compound having a reactive silicon group" may have any one or more of a hydroxyl group, a urethane bond, a polymerizable unsaturated group, and an isocyanate group.

A "polyether compound having a urethane bond" has a urethane bond. A "polyether compound having a urethane bond" may have a hydroxyl group and an isocyanate group. A "polyether compound having a urethane bond" does not have a reactive silicon group and a polymerizable unsaturated group. A "polyether compound having a urethane bond" is hereinafter also referred to as a "prepolymer".

A "polyether compound having a polymerizable unsaturated group" has a polymerizable unsaturated group. A "polyether compound having a polymerizable unsaturated group" may have any one or more of a hydroxyl group, a urethane bond, and an isocyanate group. A "polyether compound having a polymerizable unsaturated group" does not have a reactive silicon group.

Hereinafter, a "polyether compound", a "polyether compound having a reactive silicon group", a "polyether compound having a urethane bond", and a "polyether compound having a polymerizable unsaturated group" are also collectively referred to as "polyether compounds, and the like".

A "unit" that constitutes polyether compounds, and the like means an atomic group formed directly by polymerization of a monomer.

The term "main chain" means a polymer chain formed by polymerization of two or more monomers. The "main chain" in the polyether compounds, polyether compounds having reactive silicon groups, and polyether compounds having polymerizable unsaturated groups described later means a residue obtained by removing active hydrogen from an initiator, and a portion containing a repeating unit based on an alkylene oxide (polyoxyalkylene chain).

The polyether compounds, polyether compounds having reactive silicon groups, and polyether compounds having polymerizable unsaturated groups are polymers composed of a main chain and terminal groups.

A "terminal group" in the polyether compounds, polyether compounds having reactive silicon groups, and polyether compounds having polymerizable unsaturated groups means an atomic group containing an oxygen atom closest to the molecular terminal among oxygen atoms in the above polyoxyalkylene chain. However, if the atomic group contains a residue of an initiator, it is not regarded as a terminal group, but is regarded as a part of the main chain. The "number of terminal groups" in the polyether compounds, polyether compounds having reactive silicon groups, and polyether compounds having polymerizable unsaturated groups is the same number as the number of active hydrogen atoms in the initiator described later.

An "active hydrogen-containing group" refers to at least one group selected from the group consisting of a hydroxyl group bonded to a carbon atom, a carboxy group, an amino group, a monovalent functional group obtained by removing one hydrogen atom from a primary amine, a hydrazide group, and a sulfanyl group.

An "active hydrogen" refers to a hydrogen atom based on the above active hydrogen-containing group and a hydrogen atom based on the hydroxyl group of water.

A "silylation rate" in a polyether compound having a reactive silicon group refers to a ratio of the number of the above reactive silicon groups with respect to the total number of reactive silicon groups, hydroxyl groups, unsaturated groups, and isocyanate groups in the terminal groups of the polyether compound having a reactive silicon group. More specifically, the silylation rate is calculated by the following formula.

Silylation rate (%) = 100 × (number of reactive silicon groups) / [(number of reactive silicon groups) + (number of hydroxyl groups) + (number of isocyanate groups) + (number of carbon-carbon double bonds) + (number of carbon-carbon triple bonds) × 2]

The value of the silylation rate can be measured by NMR analysis. Further, when the above reactive silicon group is introduced into the terminal group of the polyether compound with a silylating agent described later, a ratio (mol%) of the number of silyl groups in the silylating agent added as described above with respect to the number of terminal groups may also be used. However, in this case, a diisocyanate compound is used as the polyisocyanate compound in a method (c1) described later.

The term "silylating agent" means a compound having a functional group that reacts with an active hydrogen-containing group, an unsaturated group, or an isocyanate group, and a reactive silicon group.

The content of isocyanate groups with respect to the total mass of a prepolymer described later is a value measured in accordance with JIS K 7301:1995.

The number average molecular weight (Mn) and weight average molecular weight (Mw) in the present specification are polystyrene equivalent molecular weights measured using GPC with tetrahydrofuran as an eluent and using a polystyrene polymer with a known molecular weight to produce a calibration curve. A molecular weight distribution (Mw/Mn) is a ratio of Mw with respect to Mn.

A "hydroxyl value" of a polyether compound is a value measured in accordance with a Method B (phthalation method) described in JIS K 1557-1:2007.

A hydroxyl value-equivalent molecular weight is a value calculated by a formula: 56,100/hydroxyl value of polyether compound × number of hydroxyl groups in polyether compound (number of active hydrogen atoms in initiator). It should be noted that when two or more types of polyether compounds with different numbers of hydroxyl groups are included, the number of hydroxyl groups in the polyether compound is the average number of hydroxyl groups.

The total degree of unsaturation of a polyether compound can be measured in accordance with JIS K 1557-3:2007.

The viscosity of a polyether compound, a polyether compound having a reactive silicon group, a prepolymer, and a polyether compound having a polymerizable unsaturated group can be measured using an E-type viscometer.

### <<Double metal cyanide complex catalyst>>

A double metal cyanide complex catalyst of the present embodiment is in a form of particles. A 50% cumulative volume particle diameter in the double metal cyanide complex catalyst determined from a volume-based cumulative particle size distribution obtained by a laser diffraction scattering method is from 0.01 to 4.0 µm. The content of the above particles having a particle diameter of 11 µm or more with respect to the total volume of the double metal cyanide complex catalyst is 10% by volume or less.

The double metal cyanide complex catalyst (hereinafter also referred to as a "DMC catalyst") functions as a polymerization catalyst of an alkylene oxide. The DMC catalyst is a crystalline solid and contains a reaction product of a metal halide salt and a transition metal cyanide compound, an organic ligand, and water of crystallization (such as coordinated water) contained within the crystal. In addition, trace amounts of impurities that are unavoidable during production in the above metal salt and metal compound, and moisture other than the water of crystallization may be contained.

The metal halide salt, transition metal cyanide compound, and organic ligand that are known in the art for producing a DMC catalyst can be used.

The DMC catalyst is considered to be represented by the following Formula 2.

M¹ₐ₁[M²(CN)_{b1}]_{c1}·d1(M¹ₑ₁X¹_{f1})·g1(Ligand)·h1(H₂O) Formula 2

In the above Formula 2, M¹ₑ₁X¹_{f1} is a metal halide salt, M¹ is a metal atom that serves as a cation, X¹ is a halogen atom that serves as a counter anion, M² is a transition metal contained in a transition metal cyanide compound and is a metal atom that serves as an active site, and Ligand is an organic ligand. a1, b1, c1, d1, e1, f1, g1, and h1 are integers, and a1, b1, c1, e1, and f1 are numbers to be electrically neutral.

Examples of the above M¹ include Zn(II), Fe(II), Fe(III), Co(II), Ni(II), Al(III), Sr(II), Mn(II), Cr(III), Cu(II), Sn(II), Pb(II), Mo(IV), Mo(VI), W(IV) and W(VI).

Examples of the above M² include Co(III), Fe(II), Fe(III), Co(II), Co(III), Cr(II), Cr(III), Mn(II), Mn(III), V(IV) and V(V).

Examples of the above X¹ include Cl, Br and I.

The metal halide salt M¹ₑ₁X¹_{f1} is preferably one or more selected from zinc fluoride, zinc chloride, zinc bromide, zinc iodide, zinc sulfate, zinc nitrate and zinc acetate. In view of the interatomic distance between M² and X¹ described later, it is more preferable to contain one or more selected from zinc chloride and zinc bromide.

Examples of the Ligand (organic ligand) include alcohols, ethers, esters, aldehydes, ketones, amides, nitriles and sulfides, ethylene glycol dimethyl ether, diethylene glycol dimethyl ether, and polyoxyalkylene polyols (or monools). The organic ligand may be composed of one type or two or more types. Examples of the alcohol include tert-butyl alcohol, n-butyl alcohol, sec-butyl alcohol, iso-butyl alcohol, tert-pentyl alcohol, iso-pentyl alcohol, and ethylene glycol mono-tert-butyl ether. Examples of the polyoxyalkylene polyol (or monool) include polypropylene diol. As the organic ligand, tert-butyl alcohol is preferred.

A preferred example of a DMC catalyst is zinc hexacyanocobaltate (Zn₃[Co(CN)₆]₂) containing an organic ligand (Ligand), water, zinc chloride or zinc bromide. Its chemical formula is thought to be

Zn₃[Co(CN)₆]₂·d1(ZnCl₂)·g1(Ligand)·h1(H₂O)

or

Zn₃[Co(CN)₆]₂··d1(ZnBr₂)·g1(Ligand)·h(H₂O).

As the DMC catalyst, a zinc hexacyanocobaltate (Zn₃[Co(CN)₆]₂) complex with tert-butyl alcohol as the ligand is preferred. The above complex may be coordinated with water and zinc chloride.

The D₅₀ of the DMC catalyst particles is from 0.01 to 4.0 µm, preferably from 0.05 to 3.5 µm, more preferably from 0.1 to 3.0 µm, still more preferably 0.1 µm or more and less than 3.0 µm, and particularly preferably from 0.5 to 2.5 µm. When D₅₀ is equal to or more than the above lower limit value, sufficient catalytic activity as a polymerization catalyst of an alkylene oxide can be exhibited. When D₅₀ is equal to or less than the above upper limit value, the filterability is likely to be improved in a purification step of polyether compounds, and the like.

The content of particles having a particle diameter of 11 µm or more with respect to the total volume of the DMC catalyst is 10% by volume or less, preferably 5% by volume or less, more preferably 4% by volume or less, and still more preferably 3% by volume or less. When the content of particles having a particle diameter of 11 µm or more is equal to or less than the above upper limit value, the filterability is likely to be improved in a purification step of polyether compounds, and the like. The content of particles having a particle diameter of 11 µm or more with respect to the total volume of the DMC catalyst is preferably from 0 to 10% by volume, more preferably from 0 to 5% by volume, still more preferably from 0 to 4% by volume, and particularly preferably from 0 to 3% by volume.

The content of particles having a particle diameter of 0.15 to 1 µm with respect to the total volume of the DMC catalyst is preferably 5% by volume or more, more preferably 7% by volume or more, and still more preferably 10% by volume or more. The upper limit value is not particularly limited, but may be, for example, 50% by volume or less, or may be 30% by volume or less. The content of particles having a particle diameter of 0.15 to 1 µm with respect to the total volume of the DMC catalyst is preferably from 5 to 50% by volume, more preferably from 7 to 50% by volume, and still more preferably from 7 to 30% by volume. When the content of particles having a particle diameter of 0.15 to 1 µm is equal to or more than the above lower limit value, the filterability is likely to be improved in a purification step of polyether compounds, and the like.

The content of particles having a particle diameter of 0.1 to 0.2 µm with respect to the total volume of the DMC catalyst is preferably 3% by volume or less, more preferably 1% by volume or less, and still more preferably 0% by volume. When the content of particles having a particle diameter of 0.1 to 0.2 µm is equal to or less than the above upper limit value, the filterability is likely to be improved in a purification step of polyether compounds, and the like.

The D₁₀ of the DMC catalyst particles is preferably from 0.01 to 2.0 µm, more preferably from 0.05 to 1.8 µm, and still more preferably from 0.1 to 1.5 µm. When D₁₀ is within the above range, sufficient catalytic activity as a polymerization catalyst of an alkylene oxide can be exhibited, a polyether compound with a narrow molecular weight distribution can be obtained, and the filterability is likely to be improved in a purification step of polyether compounds, and the like.

The D₉₀ of the DMC catalyst particles is preferably from 1 to 15 µm, more preferably from 1.5 to 10 µm, and still more preferably from 2 to 8 µm. When D₉₀ is within the above range, sufficient catalytic activity as a polymerization catalyst of an alkylene oxide can be exhibited, a polyether compound with a narrow molecular weight distribution can be obtained, and the filterability is likely to be improved in a purification step of polyether compounds, and the like.

The particle size distribution of the DMC catalyst particles in the range of 0.1 to 10 µm is preferably unimodal having only one peak. When the particle size distribution is unimodal, the filterability is likely to be improved in a purification step of polyether compounds, and the like. The particle size distribution being unimodal means that the particle size distribution in the range of 0.1 to 10 µm has only one peak. More specifically, when the particle diameter at the highest frequency in the particle size distribution within the range of 0.1 to 10 µm is taken as the peak particle diameter, it means that the frequency of plots decreases monotonically (in other words, does not increase) from the peak particle diameter towards the minimum particle diameter and the maximum particle diameter.

The (D₉₀ - D₁₀)/D₅₀ of the DMC catalyst is preferably from 0.1 to 3.0, more preferably from 0.5 to 2.5, still more preferably from 1.0 to 2.0, and most preferably from 1.05 to 1.50. (D₉₀ - D₁₀)/D₅₀ indicates the height of the particle size distribution, and when the particle size distribution of the DMC catalyst particles is unimodal, (D₉₀ - D₁₀)/D₅₀ tends to be equal to or less than the above upper limit value. When (D₉₀ - D₁₀)/D₅₀ is within the above range, sufficient catalytic activity as a polymerization catalyst of an alkylene oxide can be exhibited, a polyether compound with a narrow molecular weight distribution can be obtained, and the filterability is likely to be improved in a purification step of polyether compounds, and the like.

The D₉₀/D₁₀ of the DMC catalyst is preferably from 1.5 to 8.0, more preferably from 2.0 to 6.5, and still more preferably from 2.5 to 4.5. D₉₀/D₁₀ indicates the narrowness of the particle size distribution, and when the particle size distribution of the DMC catalyst particles is narrow, D₉₀/D₁₀ tends to be equal to or less than the above upper limit value. When D₉₀/D₁₀ is within the above range, sufficient catalytic activity as a polymerization catalyst of an alkylene oxide can be exhibited, a polyether compound with a narrow molecular weight distribution can be obtained, and the filterability is likely to be improved in a purification step of polyether compounds, and the like.

The DMC catalyst may be used, for example, for the production of polyether compounds in the above-mentioned solid state, or may be used for the production of polyether compounds in a state of a slurry in which the DMC catalyst particles are dispersed in a dispersion medium (hereinafter also referred to as a "slurry catalyst").

The slurry catalyst contains the DMC catalyst and a dispersion medium.

The slurry catalyst contains the DMC catalyst and a dispersion medium, and preferably, in addition to that, may contain impurities and moisture that are unavoidable in the production process.

As the dispersion medium for the slurry catalyst, an organic solvent known in the art for slurry catalysts can be used. For example, a refractory hydroxy compound described in Japanese Patent No. 3194255 can be used. The above hydroxy compound is a hydroxyl group-containing compound having 1 to 8 hydroxyl groups and a molecular weight of 100 to 8,000, and a compound having an alcoholic hydroxyl group such as a polyether compound is preferred.

As the dispersion medium for the slurry catalyst, a polyether compound is preferred from the viewpoint that it does not become an impurity for the product (polyether compound) of the polymerization of an alkylene oxide.

The Mn of the polyether compound used as the dispersion medium is preferably from 100 to 8,000, and more preferably from 600 to 3,000. When the Mn is equal to or more than the above lower limit value, it is unlikely to become a catalyst poison, and when it is equal to or less than the upper limit value, the handling properties of the slurry catalyst are excellent.

Further, the initiator used when polymerizing an alkylene oxide may be used as a part of the dispersion medium.

It is preferred that the dispersion medium for the slurry catalyst does not substantially contain water. More specifically, the water content of the dispersion medium is preferably 500 ppm by mass or less, more preferably 200 ppm by mass or less, and may be an undetectable amount. The water content of the dispersion medium is preferably from 0 to 500 ppm by mass, and more preferably from 0 to 200 ppm by mass.

The water content of the dispersion medium and the water content with respect to the total mass of the slurry catalyst described later are water contents measured by the Karl Fischer measurement method.

The content of the DMC catalyst with respect to the total mass of the slurry catalyst is, for example, preferably from 0.001 to 60% by mass, more preferably from 0.003 to 50% by mass, and still more preferably from 0.006 to 30% by mass.

In particular, when the dispersion medium is a polyether compound, the content of the DMC catalyst with respect to the total mass of the slurry catalyst is preferably from 0.1 to 60% by mass, more preferably from 0.5 to 40% by mass, and still more preferably from 1 to 30% by mass.

The content of water with respect to the total mass of the slurry catalyst is, for example, preferably from 0 to 10,000 ppm by mass, more preferably from 10 to 6,000 ppm by mass, and still more preferably from 100 to 4,000 ppm by mass.

### <Method for producing DMC catalyst>

The DMC catalyst of the present embodiment can be produced by coordinating an organic ligand to a reaction product obtained by reacting a metal halide salt with a transition metal cyanide compound. Further, the water content of the DMC catalyst may be adjusted after the synthesis of the DMC catalyst.

A liquid mixture containing the DMC catalyst and water is obtained by coordinating an organic ligand, in the presence of water, to a reaction product obtained by reacting a metal halide salt with a transition metal cyanide compound in the presence of water. The DMC catalyst may be obtained by removing impurities and water from the obtained liquid mixture and reducing the water content of the obtained solid to a predetermined range.

Examples of preferred aspects of the method for producing the DMC catalyst of the present embodiment include the following method.

First, an aqueous solution of a metal halide salt is reacted with an aqueous solution of a transition metal cyanide compound to generate a reaction product. An aqueous solution of an organic ligand is added thereto and stirred to coordinate the organic ligand, thereby obtaining a liquid mixture containing a DMC catalyst and water. The obtained liquid mixture is subjected to solid-liquid separation to obtain a solid. An operation of washing the obtained solid with an aqueous solution containing an organic ligand and performing solid-liquid separation is carried out once or more, preferably twice or more. Further, the obtained solid may be dried so that the water content is within the above-mentioned specific range, and may be pulverized as necessary.

The concentration of the metal halide salt in the aqueous solution of the metal halide salt is preferably 10% by mass or more, more preferably 30% by mass or more, and still more preferably 50% by mass or more. It is also preferable that the concentration is equal to or less than the saturation concentration. The concentration of the metal halide salt in the aqueous solution of the metal halide salt is preferably 10% by mass or more and equal to or less than the saturation concentration, more preferably 30% by mass or more and equal to or less than the saturation concentration, and still more preferably 50% by mass or more and equal to or less than the saturation concentration.

The concentration of the transition metal cyanide compound in the aqueous solution of the transition metal cyanide compound is preferably from 2 to 50% by mass, more preferably from 2 to 20% by mass, and still more preferably from 3 to 10% by mass.

A molar ratio of the metal contained in the metal halide salt with respect to the transition metal contained in the transition metal cyanide compound is preferably from 1.6 to 12, and more preferably from 1.8 to 8.

According to the studies by the inventors of the present application, it was found that the D₅₀ of the DMC catalyst and the content of particles having a particle diameter of 11 µm or more with respect to the total volume of the DMC catalyst are greatly dependent on the mixing conditions of the aqueous solution of the metal halide salt and the aqueous solution of the transition metal cyanide compound.

The mixing of the aqueous solution of the metal halide salt and the aqueous solution of the transition metal cyanide compound is preferably carried out by dropwise adding one aqueous solution into the other aqueous solution. It should be noted that it is preferable to dropwise add the aqueous solution of the transition metal cyanide compound into the aqueous zinc halide solution rather than dropwise adding the aqueous solution of the metal halide salt into the aqueous solution of the transition metal cyanide compound. A DMC catalyst that satisfies the above-mentioned particle diameter and particle size distribution is more likely to be obtained by dropwise adding the aqueous solution of the transition metal cyanide compound into the aqueous zinc halide solution.

A ratio of the rate of dropwise addition (mol/hour) calculated as the transition metal in the transition metal cyanide compound with respect to the total amount (mol) of metal derived from the metal halide salt contained in the aqueous solution of the metal halide salt is preferably 0.30 (mol/hour/mol) or less, more preferably 0.25 (mol/hour/mol) or less, and still more preferably 0.20 (mol/hour/mol) or less. The lower limit value of the above ratio is not particularly limited, but may be 0.01 (mol/hour/mol) or more, or may be 0.1 (mol/hour/mol) or more. The above ratio is preferably from 0.01 to 0.30 (mol/hour/mol), more preferably from 0.01 to 0.25 (mol/hour/mol), and still more preferably from 0.1 to 0.20 (mol/hour/mol). When the above ratio is equal to or less than the above upper limit value, the D₅₀ of the DMC catalyst and the content of particles having a particle diameter of 11 µm or more with respect to the total volume of the DMC catalyst can be easily controlled within the above-mentioned range.

The dropwise addition time of the aqueous solution of the transition metal cyanide compound is preferably 40 minutes or more, more preferably 60 minutes or more, and still more preferably 80 minutes or more. The upper limit value of the dropwise addition time may be, for example, 180 minutes or less, or may be 150 minutes or less. The dropwise addition time is preferably from 40 to 180 minutes, more preferably from 60 to 180 minutes, and still more preferably from 60 to 150 minutes. When the dropwise addition time is equal to or more than the above lower limit value, the D₅₀ of the DMC catalyst and the content of particles having a particle diameter of 11 µm or more with respect to the total volume of the DMC catalyst can be easily controlled within the above-mentioned range. When the rate of dropwise addition is equal to or less than the above upper limit value, the DMC catalyst can be produced more efficiently.

When mixing the aqueous solution of the metal halide salt and the aqueous solution of the transition metal cyanide compound, stirring is preferably carried out sufficiently. The stirring blade used is preferably a half-moon type stirring blade, a fullzone type stirring blade, an anchor type stirring blade, or the like. When a half-moon type stirring blade is used in a 500 mL flask, the diameter is preferably 60 mm or more, and more preferably 70 mm or more.

The reaction temperature in the reaction between the aqueous solution of the metal halide salt and the aqueous solution of the transition metal cyanide compound is preferably from 10 to 65°C, more preferably from 20 to 60°C, and still more preferably from 30 to 55°C.

The concentration of the organic ligand in the aqueous solution of the organic ligand is preferably from 10 to 90% by mass, more preferably from 25 to 75% by mass, and still more preferably from 35 to 65% by mass.

The temperature when coordinating the organic ligand is preferably from 10 to 90°C, more preferably from 20 to 80°C, and still more preferably from 30 to 70°C.

After the organic ligand is coordinated, solid-liquid separation is preferably carried out. For the solid-liquid separation, a method known in the art such as filtration and centrifugation can be employed. The obtained solid contains the DMC catalyst as well as a salt (alkali metal halide) generated by the reaction. Therefore, it is preferable to remove the salt by washing the obtained solid. More specifically, an aqueous solution of the organic ligand is added to the obtained solid and stirred, and then solid-liquid separation is performed once again. The washing time is preferably from 10 to 90 minutes, and more preferably from 20 to 60 minutes. The washing is preferably carried out several times.

When producing a slurry catalyst, a method can be used in which a liquid mixture containing the DMC catalyst and water is obtained as described above, impurities and water are removed from the obtained liquid mixture, and then a dispersion medium is added thereto to prepare a slurry containing the DMC catalyst and the dispersion medium. It should be noted that washing may be performed with an aqueous solution of the organic ligand before adding the dispersion medium.

### <<Method for producing polyether compound>>

In the method for producing a polyether compound according to the present embodiment, alkylene oxide is polymerized with an initiator having active hydrogen in the presence of the above DMC catalyst.

The number of active hydrogen atoms in the initiator is preferably 1 or more, more preferably from 2 to 10, still more preferably from 2 to 8, and particularly preferably from 2 to 6. The number of active hydrogen atoms in the initiator is preferably selected in accordance with the number of hydroxyl groups per molecule of the polyether compound to be obtained. The number of active hydrogen atoms in the initiator and the number of terminal groups in the polyether compound are the same.

One type of initiator may be used alone, or two or more types thereof may be used in combination.

The initiator preferably has a hydroxyl group as an active hydrogen-containing group.

A monohydric alcohol having a linear or branched hydrocarbon group is preferred as the initiator having one hydroxyl group. Specific examples thereof include methyl alcohol, ethyl alcohol, 1-propyl alcohol, 2-propyl alcohol, n-butyl alcohol, isobutyl alcohol, 2-butyl alcohol, tert-butyl alcohol, 2-ethylhexanol, decyl alcohol, lauryl alcohol, tridecanol, cetyl alcohol, stearyl alcohol, and oleyl alcohol.

Examples of the initiator having two hydroxyl groups include ethylene glycol, diethylene glycol, propylene glycol, dipropylene glycol, triethylene glycol, tripropylene glycol, neopentyl glycol, 1,4-butanediol, and 1,6-hexanediol.

Water is also exemplified as an initiator having two hydroxyl groups.

Examples of the initiator having three hydroxyl groups include glycerin, trimethylolpropane, and trimethylolethane.

Examples of the initiator having four or more hydroxyl groups include pentaerythritol, diglycerin, meso-erythritol, methyl glucoside, sucrose, glucose, sorbitol, dipentaerythritol, trehalose, diglycerin, and polyglycerin.

Further, a low molecular weight polymer obtained by polymerizing an alkylene oxide with these initiators in the presence of an alkali metal hydroxide may be used as an initiator.

The hydroxyl value of the initiator is preferably, for example, from 3 to 842 mgKOH/g, and more preferably from 7 to 561 mgKOH/g.

The alkylene oxide is selected in accordance with the structural unit of the polyoxyalkylene chain of the obtained polyether compound.

Examples of the alkylene oxide include ethylene oxide, propylene oxide, 1,2-butylene oxide, and 2,3-butylene oxide. Among these, ethylene oxide and propylene oxide are preferred, and propylene oxide is more preferred.

When a DMC catalyst is used as a polymerization catalyst, the Mw/Mn of the polyether compound tends to be smaller and the total degree of unsaturation of the polyether compound tends to be smaller, as compared to the case where a polymerization catalyst other than a DMC catalyst is used.

When the polyoxyalkylene chain of the polyether compound is a random copolymer chain composed of a propylene oxide unit and an ethylene oxide unit, a method of reacting a mixture of propylene oxide and ethylene oxide with an initiator in the presence of a DMC catalyst to obtain a polyether compound is preferred.

When the polyoxyalkylene chain of the polyether compound is a copolymer chain having a block composed of a propylene oxide unit and a block composed of an ethylene oxide unit, a polyether compound may be obtained by reacting propylene oxide with an initiator in the presence of a DMC catalyst to obtain a precursor, followed by reaction with ethylene oxide; or a polyether compound may be obtained by reacting ethylene oxide with an initiator in the presence of a DMC catalyst to obtain a precursor, followed by reaction with propylene oxide.

The amount of DMC catalyst used with respect to the total mass of the polyether compound obtained is preferably from 1 to 200 ppm by mass, more preferably from 2 to 100 ppm by mass, and still more preferably from 5 to 50 ppm by mass. When the amount of DMC catalyst used is equal to or more than the above lower limit value, the polymerization reaction is likely to proceed. When the amount of DMC catalyst used is equal to or less than the above upper limit value, the amount of DMC catalyst used is reduced, which is economical.

The polymerization may be carried out in a continuous or batch manner, but is preferably carried out in a batch manner.

The polymerization temperature is preferably from 30 to 180°C, more preferably from 70 to 160°C, and still more preferably from 90 to 140°C.

The polymerization pressure is preferably 1.0 MPa or less, more preferably 0.8 MPa or less, and still more preferably 0.3 MPa or less. The lower limit value is not particularly limited, but is, for example, atmospheric pressure. The polymerization pressure is preferably from atmospheric pressure to 1.0 MPa, more preferably from atmospheric pressure to 0.8 MPa, and still more preferably from atmospheric pressure to 0.3 MPa.

The alkylene oxide is preferably supplied to a reactor at a rate at which the above reaction temperature is maintained.

The reaction atmosphere is preferably an atmosphere in which moisture is unlikely to be mixed in, and more preferably an inert gas atmosphere such as nitrogen.

The reaction liquid after the above polymerization contains a polyether compound and a DMC catalyst. Further, it may also contain a stabilizer, and may contain trace amounts of impurities. Therefore, it is preferable to purify the reaction liquid by filtration. The pore size of the filter paper is, for example, preferably from 0.1 to 10 µm, and more preferably from 0.3 to 6 µm. It should be noted that the DMC catalyst is pulverized by the reaction and is contained as fine particles. The 50% cumulative volume particle diameter determined from a volume-based cumulative particle size distribution obtained by dynamic light scattering particle size distribution measurement in the reaction liquid is preferably from 0.1 to 100 nm, more preferably from 0.5 to 50 nm, and still more preferably from 1 to 30 nm. The 50% cumulative light intensity particle diameter determined from a light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the 50% cumulative light intensity particle diameter may be, for example, 0.01 µm or more, or may be 0.1 µm or more. The 50% cumulative light intensity particle diameter is preferably from 0.01 to 1.0 µm, more preferably from 0.01 to 0.9 µm, and still more preferably from 0.1 to 0.8 µm. The peak particle diameter determined from the light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the peak particle diameter may be, for example, 0.01 µm or more, or may be 0.1 µm or more. The peak particle diameter is preferably from 0.01 to 1.0 µm, more preferably from 0.01 to 0.9 µm, and still more preferably from 0.1 to 0.8 µm.

The content of the DMC catalyst with respect to the total mass of the reaction liquid is preferably from 1 to 200 ppm by mass, more preferably from 2 to 100 ppm by mass, and still more preferably from 5 to 50 ppm by mass. The content of the DMC catalyst is determined based on the amount of the DMC catalyst used when producing the polyether compound.

The content of the polyether compound with respect to the total mass of the reaction liquid is preferably 98.0% by mass or more, more preferably 99.0% by mass or more, and still more preferably 99.5% by mass or more.

### <Polyether compound>

The main chain of the polyether compound is a polymer chain composed of an oxyalkylene chain containing a residue obtained by removing active hydrogen from the initiator and a repeating unit based on one or more types of alkylene oxides (hereinafter, a repeating unit based on a monomer is simply referred to as a "monomer unit", and for example, a repeating unit based on an alkylene oxide is referred to as an "alkylene oxide unit"). In the case of a polymer chain having two or more types of alkylene oxide units, those alkylene oxide units may form a block polymer or a random polymer.

Examples of the oxyalkylene chain include a polymer chain having an ethylene oxide unit, a polymer chain having a propylene oxide unit, a polymer chain having an ethylene oxide unit and a propylene oxide unit, a polymer chain composed of an ethylene oxide unit, a polymer chain composed of a propylene oxide unit, a polymer chain composed of a butylene oxide unit, a polymer chain composed of a tetramethylene oxide unit, a polymer chain composed of an ethylene oxide unit and a propylene oxide unit, and a polymer chain composed of a propylene oxide unit and a butylene oxide unit. A polymer chain having an ethylene oxide unit, a polymer chain having a propylene oxide unit, a polymer chain having an ethylene oxide unit and a propylene oxide unit, a polymer chain composed of a propylene oxide unit, and a polymer chain composed of an ethylene oxide unit and a propylene oxide unit are preferred, and a polymer chain composed of a propylene oxide unit is particularly preferred.

The terminal group of the polyether compound is a hydroxyl group. The number of terminal groups (that is, the number of hydroxyl groups) in the polyether compound is the same as the number of active hydrogen atoms in the initiator.

The Mn of the polyether compound is preferably from 500 to 100,000, more preferably from 1,000 to 100,000, still more preferably from 1,500 to 80,000, and particularly preferably from 2,000 to 60,000. When the Mn is equal to or more than the above lower limit value, sufficient flexibility is imparted when used as an adhesive or coating material, and favorable elongation properties are likely to be obtained. When the Mn is equal to or less than the above upper limit value, the viscosity of the polyether compound can be kept low, making it easy to handle.

The hydroxyl value of the polyether compound is preferably from 0.5 to 350 mgKOH/g, more preferably from 1 to 200 mgKOH/g, and still more preferably from 5 to 100 mgKOH/g. When the hydroxyl value is equal to or more than the above lower limit value, sufficient curability is likely to be obtained when resinified. When the hydroxyl value is equal to or less than the above upper limit value, sufficient flexibility is imparted to the resin, and favorable elongation properties are likely to be obtained.

The hydroxyl value-equivalent molecular weight of the polyether compound is preferably from 500 to 100,000, more preferably from 1,000 to 100,000, still more preferably from 1,500 to 80,000, and particularly preferably from 2,000 to 60,000. When the hydroxyl value-equivalent molecular weight is equal to or more than the above lower limit value, sufficient flexibility is imparted when used as an adhesive or coating material, and favorable elongation properties are likely to be obtained. When the hydroxyl value-equivalent molecular weight is equal to or less than the above upper limit value, the viscosity of the polyether compound can be kept low, making it easy to handle.

The Mw of the polyether compound is preferably from 600 to 120,000, more preferably from 1,200 to 120,000, still more preferably from 2,000 to 90,000, and particularly preferably from 3,000 to 70,000. When the Mw is equal to or more than the above lower limit value, sufficient flexibility is imparted when used as an adhesive or coating material, and favorable elongation properties are likely to be obtained. When the Mw is equal to or less than the above upper limit value, the viscosity of the polyether compound can be kept low, making it easy to handle.

The Mw/Mn of the polyether compound is preferably from 1.00 to 1.15, more preferably from 1.00 to 1.12, and still more preferably from 1.00 to 1.10. When the Mw/Mn is equal to or less than the above upper limit value, the viscosity of the polyether compound can be kept low, making it easy to handle.

The total degree of unsaturation of the polyether compound is preferably from 0.001 to 0.040 meq/g, more preferably from 0.002 to 0.030 meq/g, and still more preferably from 0.003 to 0.010 meq/g.

The viscosity of the polyether compound at a measurement temperature of 25°C is preferably from 100 to 30,000 mPa·s, more preferably from 200 to 20,000 mPa·s, and still more preferably from 400 to 10,000 mPa·s.

### <Applications of polyether compounds>

Polyether compounds can be used as lubricating oil, raw materials for polyurethane foams, adhesives, sealing materials, coating materials, and the like. In addition, by causing a reaction with a compound that can react with the hydroxyl group in the polyether compound, a polyether compound having a reactive silicon group, a prepolymer, a polyether compound having a polymerizable unsaturated group, and the like may be produced.

### <Polyether compound having reactive silicon group>

The polyether compound having a reactive silicon group (hereinafter also referred to as a "polyether compound A") has a reactive silicon group represented by the Formula 1 described below.

### (Reactive silicon group)

The reactive silicon group has a hydroxyl group, a halogen atom, or a hydrolyzable group bonded to a silicon atom, and can be crosslinked by forming a siloxane bond. A reaction for forming a siloxane bond is accelerated by a curing catalyst. The reactive silicon group in the polyether compound A is represented by the following Formula 1.

-SiRₐX₃₋ₐ Formula 1

In the above Formula 1, R is a monovalent organic group having 1 to 20 carbon atoms and represents an organic group other than a hydrolyzable group.

R is preferably at least one group selected from the group consisting of a hydrocarbon group having 1 to 20 carbon atoms and a triorganosiloxy group.

R is preferably at least one group selected from the group consisting of an alkyl group, a cycloalkyl group, an aryl group, an α-chloroalkyl group, and a triorganosiloxy group. It is more preferably at least one group selected from the group consisting of a linear or branched alkyl group having 1 to 4 carbon atoms, a cyclohexyl group, a phenyl group, a benzyl group, an α-chloromethyl group, a trimethylsiloxy group, a triethylsiloxy group, and a triphenylsiloxy group. A methyl group or an ethyl group is preferred from the viewpoint of favorable curability of the polyether compound A and favorable stability of the curable composition. An α-chloromethyl group is preferred from the viewpoint that the curing rate of the cured product is high. A methyl group is particularly preferred from the viewpoint of ease of availability.

In the above Formula 1, X represents a hydroxyl group, a halogen atom, or a hydrolyzable group.

Examples of the hydrolyzable group include an alkoxy group, an acyloxy group, a ketoximate group, an amino group, an amide group, an acid amide group, an aminooxy group, a sulfanyl group, and an alkenyloxy group.

An alkoxy group is preferred because it is moderately hydrolyzable and easy to handle. The alkoxy group is preferably a methoxy group, an ethoxy group or an isopropoxy group, and more preferably a methoxy group or an ethoxy group. When the alkoxy group is a methoxy group or an ethoxy group, a siloxane bond is rapidly formed, a crosslinked structure is easily formed in a cured product, and physical property values of the cured product are likely to be favorable.

In the above Formula 1, a is an integer from 0 to 2. When a is 2, R groups may be the same as or different from each other. When a is 1 or less, X groups may be the same as or different from each other. Since the modulus of the cured product tends to decrease when the crosslinking density due to the siloxane bond is low, a is preferably 2 or less and more preferably 1 or less.

Examples of the reactive silicon group represented by the above Formula 1 include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a methyldiisopropoxysilyl group, an (α-chloromethyl)dimethoxysilyl group, and an (α-chloromethyl)diethoxysilyl group. A trimethoxysilyl group, a triethoxysilyl group, a dimethoxymethylsilyl group, and a diethoxymethylsilyl group are preferred, and a trimethoxysilyl group and a dimethoxymethylsilyl group are more preferred, from the viewpoints of high activity and favorable curability.

The polyether compound A is a polyether compound having an average of 1.0 or more terminal groups per molecule and having a reactive silicon group represented by the above Formula 1, in which the above terminal group has the above reactive silicon group, an unsaturated group, an isocyanate group, or a hydroxyl group.

The polyether compound A has an average of 1.0 or more terminal groups per molecule. Since the tensile strength of the cured product is higher and the modulus and elongation are further improved, the average number of terminal groups is preferably from 1.0 to 8.0, more preferably from 2.0 to 6.0, and still more preferably from 2.0 to 4.0. The number of terminal groups of the polyether compound A is the same as the number of terminal groups of the above polyether compound. The terminal group of the polyether compound A has any one of the reactive silicon group represented by the above Formula 1, an unsaturated group, an isocyanate group, or a hydroxyl group. The respective terminal groups may be the same as or different from each other.

The average number of reactive silicon groups represented by the above Formula 1 per terminal group of the polyether compound A is preferably from 0.5 to 2.0, and more preferably from 0.60 to 1.94. When the average number of reactive silicon groups is equal to or more than the above lower limit value, the crosslinking density due to the siloxane bond is high, and a favorable cured product with a high modulus can be obtained.

The average number of reactive silicon groups represented by the above Formula 1 per molecule of the polyether compound A is preferably from 0.6 to 8.0, more preferably from 0.8 to 6.0, and still more preferably from 1.2 to 4.0. When the average number of reactive silicon groups is equal to or more than the above lower limit value, the crosslinking density due to the siloxane bond is high, and a favorable cured product with a high modulus can be obtained.

The Mn of the polyether compound A is preferably from 500 to 100,000, more preferably from 1,000 to 100,000, still more preferably from 1,500 to 80,000, and particularly preferably from 2,000 to 60,000. When the Mn is equal to or more than the above lower limit value, the elongation properties of the cured product are further improved. When the Mn is equal to or less than the above upper limit value, the viscosity is low and the workability is favorable.

The Mw/Mn of the polyether compound A is preferably from 1.00 to 1.50, more preferably from 1.00 to 1.45, still more preferably from 1.00 to 1.40, and most preferably from 1.00 to 1.20. When the Mw/Mn is equal to or less than the above upper limit value, favorable elongation properties are likely to be obtained, and the viscosity is reduced, making the workability favorable.

The viscosity of the polyether compound A at a measurement temperature of 25°C is preferably from 100 to 100,000 mPa·s, more preferably from 200 to 70,000 mPa·s, and still more preferably from 400 to 30,000 mPa/s. When the viscosity is equal to or less than the above upper limit value, the handling properties are excellent.

### <Method for producing polyether compound having reactive silicon group>

In the method for producing the polyether compound A, the hydroxyl group of the polyether compound is converted into a group having a reactive silicon group represented by the above Formula 1.

Examples of the method for producing the polyether compound A include a production method through the following method (a1), (b1), or (c1).

Method (a1): a method of converting a hydroxyl group of a polyether compound into an alkenyloxy group having a carbon-carbon double bond at the molecular terminal or an alkynyloxy group having a carbon-carbon triple bond, and then reacting a silylating agent capable of introducing a reactive silicon group -SiRₐX₃₋ₐ represented by the above Formula 1 into the carbon-carbon double bond at the molecular terminal of the alkenyloxy group or the carbon-carbon triple bond of the alkynyloxy group, thereby converting the alkenyloxy group or alkynyloxy group into a group having a reactive silicon group represented by the above Formula 1.

Method (b1): a method of reacting a hydroxyl group of a polyether compound with a silylating agent having a functional group capable of reacting with the above hydroxyl group and a reactive silicon group represented by the above Formula 1, thereby converting the hydroxyl group into a group having a reactive silicon group represented by the above Formula 1.

Method (c1): a method of converting a hydroxyl group of a polyether compound into a group having an isocyanate group, and then reacting a silylating agent having a functional group capable of reacting with the isocyanate group and a reactive silicon group represented by the above Formula 1, thereby converting the hydroxyl group into a group having a reactive silicon group represented by the above Formula 1.

In the method (a1), an alkali metal salt is caused to act on a polyether compound to convert it into an alcoholate, and then a halogenated hydrocarbon compound having a carbon-carbon double bond at the molecular terminal or a halogenated hydrocarbon compound having a carbon-carbon triple bond is reacted to convert the hydroxyl group of the polyether compound into an alkenyloxy group having a carbon-carbon double bond at the molecular terminal or an alkynyloxy group having a carbon-carbon triple bond.

Examples of the alkali metal salt include sodium hydroxide, sodium alkoxide, potassium hydroxide, potassium alkoxide, lithium hydroxide, lithium alkoxide, cesium hydroxide, and cesium alkoxide.

From the viewpoints of ease of handling and solubility, sodium hydroxide, sodium methoxide, sodium ethoxide, potassium hydroxide, potassium methoxide and potassium ethoxide are preferred, and sodium methoxide and potassium ethoxide are more preferred. From the viewpoint of ease of availability, sodium methoxide is particularly preferred.

The alkali metal salt may be used in a state of being dissolved in a solvent.

Examples of the halogenated hydrocarbon compound containing a carbon-carbon double bond at the molecular terminal include vinyl chloride, allyl chloride, methallyl chloride, vinyl bromide, allyl bromide, methallyl bromide, vinyl iodide, allyl iodide, and methallyl iodide. Allyl chloride and methallyl chloride are preferred.

Examples of the halogenated hydrocarbon compound containing a carbon-carbon triple bond include propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Propargyl chloride, propargyl bromide, and propargyl iodide are preferred.

The halogenated hydrocarbon compound having a carbon-carbon double bond at the molecular terminal and the halogenated hydrocarbon compound having a carbon-carbon triple bond may be used in combination. One type of the halogenated hydrocarbon compound having a carbon-carbon double bond at the molecular terminal may be used, or two or more types thereof may be used in combination. One type of the halogenated hydrocarbon compound having a carbon-carbon triple bond may be used, or two or more types thereof may be used in combination.

Subsequently, a silylating agent capable of introducing a reactive silicon group - SiRₐX₃₋ₐ represented by the above Formula 1 is reacted with the carbon-carbon double bond at the molecular terminal of the alkenyloxy group or the carbon-carbon triple bond of the alkynyloxy group to convert the alkenyloxy group or alkynyloxy group into a group having a reactive silicon group represented by the above Formula 1. Examples of the silylating agent include a compound having both a group capable of forming a bond by reacting with an unsaturated group (for example, a sulfanyl group) and a reactive silicon group represented by the above Formula 1, and a hydrosilane compound (for example, HSiRₐX₃₋ₐ, where R, X, and a are the same as those defined in the above Formula 1). More specifically, for example, dimethoxymethylsilane, diethoxymethylsilane, dimethoxyethylsilane, methyldiisopropoxysilane, (α-chloromethyl)dimethoxysilane, (α-chloromethyl)diethoxysilane, trimethoxysilane, triethoxysilane, triisopropoxysilane, tris(2-propenyloxy)silane, triacetoxysilane, and 3-mercaptopropyltrimethoxysilane can be exemplified. From the viewpoints of high activity and favorable curability, trimethoxysilane, dimethoxymethylsilane, and diethoxymethylsilane are preferred, and dimethoxymethylsilane is more preferred.

In the method (b1), a silylating agent is reacted with a polyether compound. As the silylating agent, it is preferable to use an isocyanate silane compound represented by the following Formula 3.

OCN-(CH₂)ₙ-SiRₐX₃₋ₐ Formula 3

-SiRₐX₃₋ₐ in the above Formula 3 is the same as defined in the above Formula 1.n is an integer from 1 to 8, and preferably from 1 to 3.

By a reaction between the hydroxyl group of the polyether compound and the above isocyanate silane compound, the hydroxyl group of the polyether compound is converted into a terminal group having a urethane bond (-O-C(=O)NH-) and -SiRₐX₃₋ₐ, which is represented by -O-C(=O)NH-(CH₂)ₙ-SiRₐX₃₋ₐ.

Examples of the isocyanate silane compound include 3-isocyanatopropyltrimethoxysilane, 3-isocyanatopropyltriethoxysilane, isocyanatomethyltrimethoxysilane, isocyanatomethyltriethoxysilane, 3-isocyanatopropylmethyldimethoxysilane, 3-isocyanatopropylmethyldiethoxysilane, isocyanatomethylmethyldimethoxysilane, and isocyanatomethylmethyldiethoxysilane.

As the isocyanate silane compound, 3-isocyanatopropyltrimethoxysilane, 3-isocyanatopropyltriethoxysilane, 3-isocyanatopropylmethyldimethoxysilane, isocyanatomethylmethyldimethoxysilane and isocyanatomethyltrimethoxysilane are preferred because of their reactivity with the polyether compound and ease of handling.

A reactive silicon group is introduced into the polyether compound by reacting the active hydrogen of the polyether compound with the isocyanate group of the isocyanate silane compound represented by the above Formula 3.

When the active hydrogen-containing group of the polyether compound is a hydroxyl group, the polyether compound A is obtained in which a reactive silicon group is bonded to a polyoxyalkylene chain (-(R⁵O)ₘ-, where R⁵ represents an alkylene group, and m represents the number of moles of the oxyalkylene group) via a urethane bond and an organic group. In other words, a connected structure represented by -(R⁵O)ₘ-C(=O)NH-(CH₂)ₙ-SiRₐX₃₋ₐ is formed.

This reaction may be carried out in the presence of a urethanization catalyst. The urethanization catalyst is not particularly limited, and a known urethanization catalyst can be used as appropriate. Examples thereof include metal catalysts, such as organic tin compounds including dibutyltin dilaurate and dioctyltin dilaurate, and bismuth compounds, and base catalysts such as organic amines. The reaction temperature is preferably from 20 to 200°C, and more preferably from 50 to 150°C. Further, the urethanization reaction is preferably carried out under an inert gas atmosphere. Nitrogen is preferred as the inert gas.

A molar ratio of the total number of isocyanate groups of the isocyanate silane compound represented by the above Formula 3 with respect to the total number of active hydrogen atoms of the polyether compound is preferably set in accordance with the number of reactive silicon groups per molecule of the polyether compound A to be obtained. It is preferable to react the isocyanate silane compound represented by the above Formula 3 so that the number of reactive silicon groups per molecule of the obtained polyether compound A is at least 0.7 or more.

For example, when the active hydrogen-containing group of the polyether compound is a hydroxyl group, NCO/OH, which represents a molar ratio of the total number of isocyanate groups (NCO) of the isocyanate silane compound represented by the above Formula 3 with respect to the total number of active hydrogen atoms (total number of hydroxyl groups) of the polyether compound, is preferably from 0.7 to 1.0, more preferably from 0.8 to 1.0, and still more preferably from 0.9 to 1.0. When NCO/OH is equal to or more than the above lower limit value, the strength of the cured product is excellent, and when it is equal to or less than the upper limit value, the elongation of the cured product is excellent.

In the method (c1), a polyisocyanate compound is reacted with the hydroxyl group of a polyether compound to convert the hydroxyl group into a monovalent organic group containing an isocyanate group (hereinafter also referred to as an "isocyanatecontaining group") and having a urethane bond (-O-C(=O)NH-) on the terminal side of the bond with the polyether compound, and then a silylating agent having a functional group capable of reacting with an isocyanate group and a reactive silicon group represented by the above Formula 1 is reacted with the above isocyanate-containing group to form a terminal group which is a monovalent organic group having one or more urethane bonds (-O-C(=O)NH-) and a silylating agent residue that has reacted with the isocyanate group (hereinafter also referred to as a "urethane bond and reactive silicon group-containing group").

Hereinafter, the above polyisocyanate compound will be described as a diisocyanate compound represented by the following Formula 4 and the silylating agent having a functional group capable of reacting with an isocyanate group and a reactive silicon group represented by the above Formula 1 will be described as a compound represented by the following Formula 5 to explain the method (c1), but are not limited thereto.

OCN-R³-NCO Formula 4

R³ in the above Formula 4 represents a divalent organic group.

W-R⁴-SiRₐX₃₋ₐ Formula 5

W in the above Formula 5 represents a functional group capable of reacting with a monovalent isocyanate group (a group having one or more active hydrogen atoms), R⁴ represents a divalent organic group, and -SiRₐX₃₋ₐ is the same as defined in the above Formula 1.

When the diisocyanate compound represented by the above Formula 4 is reacted with the hydroxyl group of the polyether compound, the above isocyanate-containing group becomes a group represented by -O-C(=O)NH-R³-NCO. When the above isocyanate-containing group is reacted with the silylating agent represented by the above Formula 5, the above urethane bond and reactive silicon group-containing group becomes a group represented by -O-C(=O)NH-R³-NHC(=O)-W'-R⁴-SiRₐX₃₋ₐ (provided that W' is a divalent group obtained by removing one active hydrogen from W). For example, when W is a hydroxyl group, the above urethane bond and reactive silicon group-containing group is a group represented by -O-C(=O)NH-R³-NHC(=O)-O-R⁴-SiRₐX₃₋ₐ. In this case, the above urethane bond and reactive silicon group-containing group has two urethane bonds. Further, for example, when W is an amino group (-NH₂), the above urethane bond and reactive silicon group-containing group is a group represented by -O-C(=O)NH-R³-NHC(=O)-NH-R⁴-SiRₐX₃₋ₐ.

R³ is preferably a divalent organic group having 2 to 20 carbon atoms, and examples thereof include an alkylene group, a cycloalkylene group, a bicycloalkylene group, a monocyclic or polycyclic divalent aromatic hydrocarbon group, a divalent group obtained by removing two hydrogen atoms in a cycloalkane having an alkyl group as a substituent, a divalent group obtained by removing two hydrogen atoms in an aromatic hydrocarbon having an alkyl group as a substituent, a divalent group obtained by removing two hydrogen atoms in two or more cycloalkanes which may have an alkyl group as a substituent, bonded via an alkylene group, and a divalent group obtained by removing two hydrogen atoms in two or more aromatic hydrocarbons which may have an alkyl group as a substituent, bonded via an alkylene group.

Examples of the diisocyanate compound represented by the above Formula 4 and other polyisocyanate compounds include aromatic polyisocyanates, non-yellowing aromatic polyisocyanates (meaning compounds having no isocyanate group directly bonded to carbon atoms constituting an aromatic ring), aliphatic polyisocyanates and alicyclic polyisocyanates, as well as urethane modified products, biuret modified products, allophanate modified products, carbodiimide modified products and isocyanurate modified products, which are obtained from the above polyisocyanates.

Examples of the aromatic polyisocyanates include naphthalene-1,5-diisocyanate, polyphenylene polymethylene polyisocyanate, 4,4'-diphenylmethane diisocyanate, 2,4-tolylene diisocyanate, and 2,6-tolylene diisocyanate.

Examples of the non-yellowing aromatic polyisocyanates include xylylene diisocyanate and tetramethylxylylene diisocyanate.

Examples of the aliphatic polyisocyanates include hexamethylene diisocyanate, 2,2,4-trimethyl-hexamethylene diisocyanate, and 2,4,4-trimethyl-hexamethylene diisocyanate.

Examples of the alicyclic polyisocyanates include isophorone diisocyanate and 4,4'-methylenebis(cyclohexyl isocyanate).

As the polyisocyanate compound, those having two isocyanate groups are preferred, hexamethylene diisocyanate, isophorone diisocyanate, 4,4'-diphenylmethane diisocyanate, 2,4-tolylene diisocyanate, and 2,6-tolylene diisocyanate are more preferred, and tolylene diisocyanates are still more preferred because the tensile strength of the cured product is likely to be obtained. One type of the polyisocyanate compound may be used, or two or more types thereof may be used in combination.

R⁴ in the silylating agent having a functional group capable of reacting with an isocyanate group represented by the above Formula 5 and -SiRₐX₃₋ₐ is preferably a divalent organic group having 1 to 20 carbon atoms, more preferably a group obtained by removing two hydrogen atoms from an aromatic hydrocarbon having 6 to 10 carbon atoms, a group obtained by removing two hydrogen atoms from an aromatic hydrocarbon having 6 to 10 carbon atoms substituted with an alkyl group having 1 to 4 carbon atoms, a group obtained by removing two hydrogen atoms from a cyclic hydrocarbon having 3 to 10 carbon atoms, or a group obtained by removing two hydrogen atoms from a linear hydrocarbon having 1 to 12 carbon atoms, still more preferably a group obtained by removing two hydrogen atoms from a linear hydrocarbon having 1 to 8 carbon atoms, and particularly preferably a group obtained by removing two hydrogen atoms from a linear hydrocarbon having 1 to 6 carbon atoms.

W is preferably a group having 1 or 2 active hydrogen atoms selected from a hydroxyl group, a carboxy group, a sulfanyl group, an amino group, and an amino group in which one hydrogen atom is substituted with an alkyl group having 1 to 6 carbon atoms, preferably a hydroxyl group, a sulfanyl group, an amino group, a methylamino group, an ethylamino group and a butylamino group, and more preferably a hydroxyl group, an amino group, a methylamino group, an ethylamino group and a butylamino group.

In the case of methods (b1) and (c1), the reactive silicon group in the obtained polyether compound A is formed via one or more organic groups represented by the following Formula (i). That is, the polyether compounds A obtained by the methods (b1) and (c1) contain one or more organic groups represented by the following Formula (i) per terminal group. It should be noted that the polyether compound A obtained by the method (b1) contains only one organic group represented by the following Formula (i) per terminal group, and the polyether compound A obtained by the method (c1) contains two or more organic groups represented by the following Formula (i) per terminal group.

-C(=O)NH- Formula (i)

The organic group (i) is a divalent group derived from a urethane bond or a urea bond. When the isocyanate silane compound represented by the above Formula 3 is used as a silylating agent, the number of organic groups (i) per terminal group is one.

The organic group (i) preferably forms a polyoxyalkylene chain and a urethane bond (-O-C(=O)NH-, where -O- represents an oxygen atom at the terminal of the polyoxyalkylene chain). That is, it is preferable that one organic group (i) is present between the polyoxyalkylene chain and the reactive silicon group in the polyether compound A. When the polyether compound A is produced by the above-mentioned method (b1), the number of organic groups represented by the above Formula (i) per terminal group contained in the polyether compound A is one. When the polyether compound A is produced by the method (b1), a polyether compound A with a high silylation rate is likely to be obtained. When produced by the method (b1), a polyether compound A with a narrow molecular weight distribution is likely to be obtained. Since the viscosity of the polyether compound A is suppressed, the workability is improved.

When the isocyanate silane compound represented by the above Formula 3 contains one isocyanate group and one reactive silicon group, respectively, the number of reactive silicon groups per molecule is the same as the number of groups (i) per molecule in the polyether compound A.

A silylation rate of the polyether compound A is preferably from 50 to 100 mol%, and more preferably from 60 to 98 mol%. When the silylation rate is equal to or more than the lower limit value of the above range, the cured product exhibits excellent tensile strength and high modulus.

When the curable composition contains two or more types of polyether compound A, it is sufficient that the average silylation rate of the entire polyether compound A is within the above range.

The reaction liquid after producing the polyether compound A contains the polyether compound A and the DMC catalyst. Further, it may also contain a stabilizer, and may contain trace amounts of impurities. Therefore, it is preferable to purify the reaction liquid by filtration. The pore size of the filter paper is, for example, preferably from 0.1 to 10 µm, and more preferably from 0.3 to 6 µm. It should be noted that since the DMC catalyst does not contribute to the urethanization reaction, it is considered that the particle diameter of the DMC catalyst in the composition containing the polyether compound is almost unchanged. The 50% cumulative volume particle diameter determined from a volume-based cumulative particle size distribution obtained by dynamic light scattering particle size distribution measurement in the reaction liquid is preferably from 0.1 to 100 nm, more preferably from 0.5 to 50 nm, and still more preferably from 1 to 30 nm. The 50% cumulative light intensity particle diameter determined from a light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the 50% cumulative light intensity particle diameter may be, for example, 0.01 µm or more, or may be 0.1 µm or more. The 50% cumulative light intensity particle diameter is preferably from 0.01 to 1.0 µm, more preferably from 0.01 to 0.9 µm, and still more preferably from 0.1 to 0.8 µm. The peak particle diameter determined from the light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the peak particle diameter may be, for example, 0.01 µm or more, or may be 0.1 µm or more. The peak particle diameter is preferably from 0.01 to 1.0 µm, more preferably from 0.01 to 0.9 µm, and still more preferably from 0.1 to 0.8 µm.

The content of the DMC catalyst with respect to the total mass of the reaction liquid is preferably from 1 to 200 ppm by mass, more preferably from 2 to 100 ppm by mass, and still more preferably from 5 to 50 ppm by mass.

### (Curable composition containing polyether compound having reactive silicon group)

The polyether compound having a reactive silicon group is used in a curable composition. The curable composition is obtained by mixing the polyether compound A and other necessary components. Only one type of the polyether compound A may be used, or two or more types thereof may be used in combination.

The content of the polyether compound A with respect to the total mass of the curable composition is preferably from 1 to 90% by mass, more preferably from 10 to 80% by mass, and still more preferably from 20 to 70% by mass. When it is equal to or less than the upper limit value of the above range, the cured product exhibits better tensile strength, and the elongation properties are further improved.

Examples of other components contained in the curable composition include curable compounds other than the polyether compound A such as epoxy resins, epoxy resin curing agents, curing catalysts (silanol condensation catalysts), fillers, plasticizers, thixotropic agents, stabilizers, adhesion-imparting agents, physical property modifiers, dehydrating agents, adhesion-imparting resins, reinforcing materials such as fillers, surface modifiers, flame retardants, foaming agents, solvents, and silicates.

Conventionally known components described in International Patent Publication No. 2013/180203, International Patent Publication No. 2014/192842, International Patent Publication No. 2016/002907, Japanese Unexamined Patent Application, First Publication No. 2014-88481, Japanese Unexamined Patent Application, First Publication No. 2015-10162, Japanese Unexamined Patent Application, First Publication No. 2015-105293, Japanese Unexamined Patent Application, First Publication No. 2017-039728, Japanese Unexamined Patent Application, First Publication No. 2017-214541 and the like can be used in combination without limitation as other components. Two or more types of each component may be used in combination.

The curable composition may be a one-component type in which all of the polyether compound A and other components are blended in advance, sealed and stored, and cured by moisture in the air after application; or may be a two-component type in which a main agent composition containing at least the polyether compound A and a curing agent composition containing at least a curing catalyst are stored separately, and the curing agent composition and the main agent composition are mixed before use.

It is preferred that the one-component type curable composition does not contain water. It is preferable to dehydrate and dry the mixed components containing water in advance, or to dehydrate them by reducing the pressure during the mixing and kneading process.

In the two-component type curable composition, the curing agent composition may contain water. Although the main agent composition is unlikely to gel even when it contains a small amount of water, it is preferable to dehydrate and dry the mixed components in advance from the viewpoint of storage stability.

A dehydrating agent may be added to the one-component type curable composition or the two-component type main agent composition in order to improve the storage stability.

### (Applications of curable composition containing a polyether compound having a reactive silicon group)

As applications of the curable composition containing the polyether compound A, adhesives, sealing materials (for example, elastomeric sealing materials for construction, sealing materials for double glazing, sealing materials for rust prevention and waterproofing of glass edges, sealing materials for back surfaces of solar cells, sealants for buildings, sealants for marine vessels, sealants for automobiles, and sealants for roads), and electrical insulating materials (insulating coating materials for electric wires and cables) are suitable.

### <Prepolymer>

A prepolymer (hereinafter also referred to as a "polyether compound B") is a reaction product of a polyether compound and a polyisocyanate. A urethane bond is formed between the polyether compound and the polyisocyanate by a urethanization reaction between the hydroxyl group of the polyether compound and the isocyanate group of the polyisocyanate. Among the isocyanate groups in the polyisocyanate unit introduced into the polyether compound B, the isocyanate group that remains unreacted with the hydroxyl group of the polyether compound becomes the isocyanate group at the molecular terminal of the polyether compound B. Further, among the hydroxyl groups in the polyether compound unit, the hydroxyl group that remains unreacted with the isocyanate group of the polyisocyanate becomes the hydroxyl group at the molecular terminal of the polyether compound B. In other words, the molecular terminal group of the polyether compound B contains either one or both of a hydroxyl group and an isocyanate group.

The Mn of the polyether compound B is preferably from 500 to 1,000,000, more preferably from 1,000 to 1,000,000, still more preferably from 1,500 to 500,000, and particularly preferably from 2,000 to 100,000. When the Mn is equal to or more than the above lower limit value, sufficient flexibility is imparted when used as an adhesive or coating material, and favorable elongation properties are obtained. When the Mn is equal to or less than the above upper limit value, the viscosity of the polyether compound B can be kept low, making it easy to handle.

The Mw/Mn of the polyether compound B is preferably from 1.00 to 1.50, more preferably from 1.00 to 1.45, and still more preferably from 1.00 to 1.40. When the Mw/Mn is equal to or less than the above upper limit value, favorable elongation properties are likely to be obtained, and the viscosity is reduced, making the workability favorable.

When the molecular terminal of the polyether compound B is an isocyanate group, the content of the isocyanate group with respect to the total mass of the polyether compound B is preferably from 0.1 to 25% by mass, more preferably from 0.5 to 18% by mass, and still more preferably from 1 to 15% by mass.

When the content of the isocyanate group is equal to or more than the above lower limit value, the tensile strength of the cured product is likely to be improved. When the content of the isocyanate group is equal to or less than the above upper limit value, gelation is unlikely to occur during the reaction.

When the content of the urethane bond with respect to the total mass of the polyether compound B is preferably from 0.01 to 40% by mass, more preferably from 0.1 to 30% by mass, and still more preferably from 1 to 15% by mass.

The viscosity of the polyether compound B at a measurement temperature of 25°C is preferably from 100 to 100,000 mPa·s, more preferably from 200 to 50,000 mPa·s, and still more preferably from 500 to 30,000 mPa/s. When the viscosity is equal to or less than the above upper limit value, the handling properties are excellent.

### <Method for producing prepolymer>

In a method for producing the polyether compound B, a polyether compound is reacted with a polyisocyanate. If necessary, a urethanization catalyst may be used. One type of the polyether compound may be used, or two or more types thereof may be used in combination.

Examples of the polyisocyanate include an aliphatic polyisocyanate, an alicyclic polyisocyanate, an aromatic polyisocyanate, and an araliphatic polyisocyanate. The number of isocyanate groups included in the polyisocyanate is preferably from 2 to 3, and more preferably 2.

Examples of the aliphatic polyisocyanate include linear aliphatic polyisocyanates such as tetramethylene diisocyanate, dodecamethylene diisocyanate, and hexamethylene diisocyanate, as well as branched aliphatic polyisocyanates such as 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate.

Examples of the alicyclic polyisocyanate include isophorone diisocyanate (3-isocyanatomethyl-3,5,5-trimethylcyclohexyl isocyanate, IPDI), hydrogenated xylylene diisocyanate, 4,4'-dicyclohexylmethane diisocyanate, 1,4-cyclohexane diisocyanate, methylcyclohexylene diisocyanate, and 1,3-bis(isocyanatomethyl)cyclohexane.

Examples of the aromatic polyisocyanate include tolylene diisocyanate (TDI), 2,2'-diphenylmethane diisocyanate, 2,4'-diphenylmethane diisocyanate, 4,4'-diphenylmethane diisocyanate (diphenylmethane 4,4'-diisocyanate, MDI), 4,4'-dibenzyl diisocyanate, 1,5-naphthylene diisocyanate, xylylene diisocyanate, 1,3-phenylene diisocyanate, and 1,4-phenylene diisocyanate.

Examples of the araliphatic polyisocyanate include dialkyldiphenylmethane diisocyanate, tetraalkyldiphenylmethane diisocyanate, and α,α,α,α-tetramethylxylylene diisocyanate.

As the polyisocyanate, alicyclic polyisocyanates and aromatic polyisocyanates are preferred, and IPDI, MDI and TDI are more preferred.

One type of the polyisocyanate may be used alone, or two or more types thereof may be used in combination.

The functional group at the molecular terminal of the polyether compound B can be controlled by adjusting the molar ratio of the total amount of isocyanate groups in the polyisocyanate with respect to the total amount of hydroxyl groups in the polyether compound (hereinafter also referred to as an "NCO/OH ratio"). For example, when producing a polyether compound B whose molecular terminal is an isocyanate group, the NCO/OH ratio is preferably from 2 to 10, more preferably from 2 to 8, still more preferably from 2 to 7, and particularly preferably from 2 to 5. When producing a polyether compound B whose molecular terminal is a hydroxyl group, the NCO/OH ratio is preferably from 0.1 to 0.8, more preferably from 0.2 to 0.7, and still more preferably from 0.3 to 0.6.

The urethanization catalyst is preferably one or more selected from tertiary amine compounds and organometallic compounds. It should be noted that when a highly reactive polyisocyanate is used, it is not necessary to use a urethanization catalyst.

Examples of the tertiary amine compound include triethylamine, triethylenediamine, and 1,8-diazabicyclo(5,4,0)-undecene-7.

The organometallic compound is preferably one or more selected from tin-based compounds and tin-free compounds.

Examples of the tin-based compound include dibutyltin dichloride, dibutyltin oxide, dibutyltin dibromide, dibutyltin dimaleate, dibutyltin dilaurate, dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the tin-free compound include titanium-based compounds such as dibutyltitanium dichloride, tetrabutyl titanate, and butoxytitanium trichloride; lead-based compounds such as lead oleate, lead 2-ethylhexanoate, lead benzoate, and lead naphthenate; iron-based compounds such as iron 2-ethylhexanoate and iron acetylacetonate; cobalt-based compounds such as cobalt benzoate and cobalt 2-ethylhexanoate; zinc-based compounds such as zinc naphthenate and zinc 2-ethylhexanoate; and zirconium-based compounds such as zirconium naphthenate.

One type of the urethanization catalyst may be used alone, or two or more types thereof may be used in combination.

When a urethanization catalyst is used, the amount of the urethanization catalyst used is preferably, for example, from 0.001 to 1.0 parts by mass with respect to 100 parts by mass of the polyether compound.

For producing the polyether compound B, a solvent can be used, if necessary.

The solvent is preferably one or more selected from ketones such as acetone and methyl ethyl ketone, esters such as ethyl acetate, and aromatic hydrocarbons such as toluene and xylene.

One type of the solvent may be used alone, or two or more types thereof may be used in combination.

When a solvent is used, the amount of the solvent used is not particularly limited, but is preferably from 100 to 1,000 parts by mass with respect to 100 parts by mass of the polyether compound.

Examples of the method for producing the polyether compound B include a method in which a polyether compound, a polyisocyanate, and, if necessary, a urethanization catalyst and a solvent are mixed. Alternatively, a method may be employed in which a polyisocyanate is dropwise added to a liquid mixture obtained by mixing a polyether compound and, if necessary, a urethanization catalyst and a solvent.

The reaction temperature is preferably from 50 to 120°C, and more preferably from 50 to 100°C. When the reaction temperature is equal to or higher than the above lower limit value, the urethanization reaction is likely to be accelerated. When the reaction temperature is equal to or lower than the above upper limit value, side reactions other than the urethanization reaction are likely to be suppressed.

When a urethanization catalyst is used, it is preferable to add a reaction terminator after completion of the reaction is to inactivate the urethanization catalyst. Examples of the reaction terminator include acetylacetone.

One type of the reaction terminator may be used alone, or two or more types thereof may be used in combination.

When unreacted polyisocyanate remains after the reaction, it is preferable to remove the polyisocyanate by distillation and purify the polyether compound B.

The reaction liquid after producing the polyether compound B contains the polyether compound B and the DMC catalyst. Further, it may also contain a stabilizer, and may contain trace amounts of impurities. Therefore, it is preferable to purify the reaction liquid by filtration. The pore size of the filter paper is, for example, preferably from 0.1 to 10 µm, and more preferably from 0.3 to 6 µm. It should be noted that since the DMC catalyst does not contribute to the urethanization reaction, it is considered that the particle diameter of the DMC catalyst in the composition containing the polyether compound is almost unchanged. The 50% cumulative volume particle diameter determined from a volume-based cumulative particle size distribution obtained by dynamic light scattering particle size distribution measurement in the reaction liquid is preferably from 0.1 to 100 nm, more preferably from 0.5 to 50 nm, and still more preferably from 1 to 30 nm. The 50% cumulative light intensity particle diameter determined from a light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the 50% cumulative light intensity particle diameter may be, for example, 0.01 µm or more, or may be 0.1 µm or more. The 50% cumulative light intensity particle diameter is preferably from 0.01 to 1.0 µm, more preferably from 0.01 to 0.9 µm, and still more preferably from 0.1 to 0.8 µm. The peak particle diameter determined from the light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the peak particle diameter may be, for example, 0.01 µm or more, or may be 0.1 µm or more. The peak particle diameter is preferably from 0.01 to 1.0 µm, more preferably from 0.01 to 0.9 µm, and still more preferably from 0.1 to 0.8 µm.

The content of the DMC catalyst with respect to the total mass of the reaction liquid is preferably from 1 to 200 ppm by mass, more preferably from 2 to 100 ppm by mass, and still more preferably from 5 to 50 ppm by mass.

### (Polyurethane composition containing prepolymer)

The polyether compound B is used in a polyurethane composition. The polyurethane composition is obtained by mixing the polyether compound B and, if necessary, other optional components. Only one type of the polyether compound B may be used, or two or more types thereof may be used in combination.

The content ratio of the polyether compound B with respect to the total mass of the polyurethane composition is preferably from 15 to 100% by mass, and more preferably from 30 to 100% by mass. The polyurethane composition may further contain optional components other than the polyether compound B.

Examples of the optional component contained in the polyurethane composition include catalysts, fillers, plasticizers, stabilizers, pigments, fibers, dyes, desiccants, adhesion improvers, rheology modifiers, solvents, natural resins, non-reactive polymers, and other additives. Each one of these optional components may be used alone, or two or more types thereof may be used in combination. When the polyurethane composition contains optional components, the content of the optional components with respect to the total mass of the polyurethane composition is preferably more than 0% by mass and 50% by mass or less.

A cured product can be produced by reacting the polyurethane composition with a curing agent. When the molecular terminal of the polyether compound B is an isocyanate group, a curing agent having active hydrogen is used. The active hydrogen-containing group included in the curing agent is preferably a hydroxyl group. When the molecular terminal of the polyether compound B is a hydroxyl group, a curing agent having an isocyanate group is used.

When the molecular terminal of the polyether compound B is an isocyanate group, the isocyanate group of the polyether compound B contained in the polyurethane composition and the active hydrogen-containing group (for example, a hydroxyl group) of the curing agent undergo a urethanization reaction, whereby the polyether compound B is crosslinked by a urethane bond, and a cured product is obtained. When the molecular terminal of the polyether compound B is a hydroxyl group, the hydroxyl group of the polyether compound B contained in the polyurethane composition and the isocyanate group of the curing agent undergo a urethanization reaction, whereby the polyether compound B is crosslinked by a urethane bond, and a cured product is obtained.

When the curing agent has a hydroxyl group, the number of hydroxyl groups in the curing agent is preferably 2 or more, more preferably from 2 to 4, and still more preferably from 2 to 3. It should be noted that water is a curing agent having two hydroxyl groups.

When the curing agent has an isocyanate group, the number of isocyanate groups in the curing agent is preferably 2 or more, more preferably from 2 to 4, and still more preferably from 2 to 3.

Examples of the curing agent having a hydroxyl group include the initiators described in the method for producing a polyether compound, and water.

Examples of the curing agent having an isocyanate group include the polyisocyanates described above.

When the molecular terminal of the polyether compound B is an isocyanate group, a molar ratio of the total amount of isocyanate groups in the polyether compound B with respect to the total amount of hydroxyl groups in the curing agent is preferably more than 1, and more preferably from 1.01 to 1.20.

When the molecular terminal of the polyether compound B is a hydroxyl group, a molar ratio of the total amount of hydroxyl groups in the polyether compound B with respect to the total amount of isocyanate groups in the curing agent is preferably more than 0.8, and more preferably from 0.81 to 1.20.

As a method of mixing the polyurethane composition and the curing agent, it may be a one-component type in which the polyurethane composition as a one-component type composition obtained by mixing everything except the curing agent in advance is sealed and stored, and cured by moisture in the air after application; or may be a two-component type in which the polyurethane composition as a main agent composition and a curing agent composition containing at least a curing agent are stored separately, and the curing agent composition and the main agent composition are mixed before use. In the case of the one-component type, moisture (water) in the air functions as a curing agent. That is, when the molecular terminal of the polyether compound B is an isocyanate group, the one-component type is preferred.

It is preferred that the one-component type composition does not contain water. It is preferable to dehydrate and dry the mixed components containing water in advance, or to dehydrate them by reducing the pressure during the preparation of the one-component type composition.

In the case of the two-component type, the curing agent composition may contain water. Although the main agent composition is unlikely to gel even when it contains a small amount of water, it is preferable to dehydrate and dry the mixed components in advance from the viewpoint of storage stability. In the case of the two-component type, the above optional components may be contained in the curing agent composition.

A dehydrating agent may be added to the one-component type composition or the two-component type main agent composition in order to improve the storage stability.

The reaction temperature is preferably from 20 to 40°C. In the case of the one-liquid type, the relative humidity at the above reaction temperature is preferably from 40 to 60%.

### (Applications of polyurethane composition containing prepolymer)

As applications of the polyurethane composition containing the polyether compound B, adhesives, sealing materials (for example, elastomeric sealing materials for construction, sealing materials for double glazing, sealing materials for rust prevention and waterproofing of glass edges, sealing materials for back surfaces of solar cells, sealants for buildings, sealants for marine vessels, sealants for automobiles, and sealants for roads), coating materials (for paint applications), and electrical insulating materials (insulating coating materials for electric wires and cables) are suitable.

As an adhesive, it is suitable as an elastic adhesive for joining plastics together, joining metals together, and joining plastics to metals. In addition, it is also suitable as an elastic sealing material and elastic coating material.

### <Polyether compound having polymerizable unsaturated group>

A polyether compound having a polymerizable unsaturated group (hereinafter also referred to as a "polyether compound C") is a reaction product of a polyether compound and a compound having a polymerizable unsaturated group. Examples of the polymerizable unsaturated group include a carbon-carbon double bond at the molecular terminal. As the polymerizable unsaturated group, a (meth)acryloyl group and a (meth)acryloyloxy group are preferred. The term "(meth)acryloyl group" is a general term for acryloyl groups and methacryloyl groups. The term "(meth)acryloyloxy group" is a general term for acryloyloxy groups and methacryloyloxy groups.

The polyether compound C has an average of 1.0 or more terminal groups per molecule. Since the crosslinking reaction and curing properties are further improved when resinified, the average number of terminal groups is preferably from 1.0 to 8.0, more preferably from 2.0 to 6.0, and still more preferably from 2.0 to 4.0. The number of terminal groups of the polyether compound C is the same as the number of terminal groups of the above polyether compound.

The average number of polymerizable unsaturated groups per terminal group of the polyether compound C is preferably from 0.5 to 2.0, and more preferably from 0.8 to 1.2. When the average number of polymerizable unsaturated groups is equal to or more than the above lower limit value, the crosslinking reaction and curability are likely to be favorable when resinified. When the average number of polymerizable unsaturated groups is equal to or less than the above upper limit value, sufficient flexibility is imparted to the resin, and favorable elongation properties are likely to be obtained.

The average number of polymerizable unsaturated groups per molecule of the polyether compound C is preferably from 1.0 to 8.0, more preferably from 1.5 to 6.0, and still more preferably from 2.0 to 4.0. When the average number of polymerizable unsaturated groups is equal to or more than the above lower limit value, the crosslinking reaction and curability are likely to be favorable when resinified. When the average number of polymerizable unsaturated groups is equal to or less than the above upper limit value, sufficient flexibility is imparted to the resin, and favorable elongation properties are likely to be obtained.

The Mn of the polyether compound C is preferably from 500 to 1,000,000, more preferably from 1,000 to 1,000,000, still more preferably from 1,500 to 500,000, and particularly preferably from 2,000 to 100,000. When the Mn is equal to or more than the above lower limit value, sufficient flexibility is imparted when used as an adhesive or coating material, and favorable elongation properties are likely to be obtained. When the Mn is equal to or less than the above upper limit value, the viscosity of the polyether compound C can be kept low, making it easy to handle.

The Mw/Mn of the polyether compound C is preferably from 1.00 to 1.50, more preferably from 1.00 to 1.45, and still more preferably from 1.00 to 1.40. When the Mw/Mn is equal to or less than the above upper limit value, favorable elongation properties are likely to be obtained, and the viscosity is reduced, making the workability favorable.

When the polyether compound C has a urethane bond, the content of the urethane bond with respect to the total mass of the polyether compound C is preferably from 0.01 to 40% by mass, more preferably from 0.1 to 30% by mass, and still more preferably from 1 to 15% by mass.

The viscosity of the polyether compound C at a measurement temperature of 25°C is preferably from 100 to 100,000 mPa·s, more preferably from 200 to 50,000 mPa·s, and still more preferably from 500 to 30,000 mPa/s. When the viscosity is equal to or less than the above upper limit value, the handling properties are excellent.

### <Method for producing polyether compound having polymerizable unsaturated group>

In the method for producing the polyether compound C, the hydroxyl group of the polyether compound is converted into a group having a polymerizable unsaturated group.

Examples of the method for producing the polyether compound C include a production method through the following method (a2), (b2), or (c2).

Method (a2): a method of reacting a hydroxyl group of a polyether compound with a compound having a functional group capable of reacting with the above hydroxyl group and a polymerizable unsaturated group (hereinafter also referred to as a "compound 1"), thereby converting the hydroxyl group into a group having a polymerizable unsaturated group.

Method (b2): a method of reacting a hydroxyl group of a polyether compound with a polyisocyanate to obtain a prepolymer having an isocyanate group at the molecular terminal, and then reacting with a compound having a functional group capable of reacting with an isocyanate group and a polymerizable unsaturated group (hereinafter also referred to as a "compound 2"), thereby converting the hydroxyl group into a group having a polymerizable unsaturated group.

Method (c2): a method in which a hydroxyl group of a polyether compound is reacted with a polyisocyanate to obtain a prepolymer having a hydroxyl group at the molecular terminal, and then the above compound 1 is reacted to convert the hydroxyl group into a group having a polymerizable unsaturated group.

As the prepolymer having an isocyanate group at the molecular terminal in the method (b2), the above-mentioned polyether compound B having an isocyanate group at the molecular terminal can be used. As the prepolymer having a hydroxyl group at the molecular terminal in the method (c2), the above-mentioned polyether compound B having a hydroxyl group at the molecular terminal can be used.

As the compound 1, a compound having one isocyanate group and a polymerizable unsaturated group is preferred, a (meth)acrylate having one isocyanate group is more preferred, an isocyanate alkyl (meth)acrylate is still more preferred, an isocyanate alkyl (meth)acrylate having 8 or less carbon atoms excluding the carbon in the isocyanate group of the isocyanate alkyl group is particularly preferred, and an isocyanate alkyl (meth)acrylate having 4 or less carbon atoms excluding the carbon in the isocyanate group of the isocyanate alkyl group is most preferred. The term "(meth)acrylate" is a general term for acrylates and methacrylates.

Examples of the compound 1 include 2-isocyanate ethyl (meth)acrylate and isocyanate methyl (meth)acrylate. Examples of commercially available products include Karenz-AOI and Karenz-MOI (both product names, manufactured by Showa Denko K.K.).

As the compound 2, a compound having an active hydrogen-containing group such as a hydroxyl group or an amino group, and a polymerizable unsaturated group is preferred, a (meth)acrylate having an active hydrogen-containing group such as a hydroxyl group or an amino group is preferred, a hydroxyalkyl (meth)acrylate or hydroxycycloalkyl (meth)acrylate having one hydroxyl group is more preferred, and a hydroxyalkyl (meth)acrylate having an alkyl group with 8 or less carbon atoms is particularly preferred.

Examples of the compound 2 include 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate. Examples of commercially available products include Light Ester HO-250 (N), Light Ester HOP (N), Light Ester HOA (N), Light Ester HOP-A (N), and Light Ester HOB (N) (all product names, manufactured by Kyoeisha Chemical Co., Ltd.), and 4-HBA (a product name, manufactured by Osaka Organic Chemical Industry Ltd.).

When the composition containing the polyether compound C is a photocurable composition, it is preferred that all of the polymerizable unsaturated groups contained in the polyether compound C are acryloyloxy groups. The polyether compound C as described above is obtained by using the compounds 1 and 2 in which the polymerizable unsaturated groups are acryloyloxy groups.

In the methods (a2) and (c2), a molar ratio of the amount of the compound 1 used with respect to the amount of hydroxyl groups in the polyether compound or the amount of hydroxyl groups in the prepolymer having a hydroxyl group at the molecular terminal is preferably from 0.8 to 1.2, more preferably from 0.9 to 1.1, and still more preferably from 0.95 to 1.05.

In the method (b2), a molar ratio of the amount of the compound 2 used with respect to the amount of isocyanate groups in the prepolymer having an isocyanate group at the molecular terminal may be more than 1. An excess portion of the compound 2 remains unreacted, but may be contained in the composition containing the polyether compound C. The above molar ratio is preferably from 0.8 to 1.5, more preferably from 0.9 to 1.3, and still more preferably from 0.95 to 1.1.

In the methods (a2), (b2), and (c2), the reaction between a hydroxyl group and a functional group capable of reacting with the hydroxyl group and the reaction between an isocyanate group and a functional group capable of reacting with the isocyanate group may be carried out by a method known in the art. When the above reaction is a reaction between a hydroxyl group and an isocyanate group, the above-mentioned urethanization catalyst may be used as necessary.

The reaction liquid after producing the polyether compound C contains the polyether compound C and the DMC catalyst. Further, it may also contain a stabilizer, and may contain trace amounts of impurities. Therefore, it is preferable to purify the reaction liquid by filtration. The pore size of the filter paper is, for example, preferably from 0.1 to 10 µm, and more preferably from 0.3 to 6 µm. It should be noted that since the DMC catalyst does not contribute to the urethanization reaction, it is considered that the particle diameter of the DMC catalyst in the composition containing the polyether compound is almost unchanged. The 50% cumulative volume particle diameter determined from a volume-based cumulative particle size distribution obtained by dynamic light scattering particle size distribution measurement in the reaction liquid is preferably from 0.1 to 100 nm, more preferably from 0.5 to 50 nm, and still more preferably from 1 to 30 nm. The 50% cumulative light intensity particle diameter determined from a light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the 50% cumulative light intensity particle diameter may be, for example, 0.01 µm or more, or may be 0.1 µm or more. The 50% cumulative light intensity particle diameter is preferably from 0.01 to 1.0 µm, more preferably from 0.01 to 0.9 µm, and still more preferably from 0.1 to 0.8 µm. The peak particle diameter determined from the light intensity-based cumulative particle size distribution within a range of 0.1 to 6.5 µm obtained by dynamic light scattering particle size distribution measurement in the reaction liquid is preferably 1.0 µm or less, more preferably 0.9 µm or less, and still more preferably 0.8 µm or less. The lower limit value of the peak particle diameter may be, for example, 0.01 µm or more, or may be 0.1 µm or more. The peak particle diameter is preferably from 0.01 to 1.0 µm, more preferably from 0.01 to 0.9 µm, and still more preferably from 0.1 to 0.8 µm.

The content of the DMC catalyst with respect to the total mass of the reaction liquid is preferably from 1 to 200 ppm by mass, more preferably from 2 to 100 ppm by mass, and still more preferably from 5 to 50 ppm by mass.

### (Composition containing polyether compound having polymerizable unsaturated group)

The polyether compound C is used in a curable composition. The curable composition is obtained by mixing the polyether compound C and other optional components. Only one type of the polyether compound C may be used, or two or more types thereof may be used in combination.

The content of the polyether compound C with respect to the total mass of the curable composition is preferably 65% by mass or more, and more preferably 75% by mass or more.

The curable composition may contain, in addition to the polyether compound C, a compound having a polymerizable unsaturated group other than the polyether compound C (hereinafter also referred to as "(an)other compound(s)"), a photopolymerization initiator, and other components.

Examples of other compounds include other compounds 1 and 2 below.

The other compound 1 is a compound other than the polyether compound C, and is preferably a compound having one (meth)acryloyloxy group and one or more hydroxyl groups, and preferably has one or two hydroxyl groups. The other compound 1 may be a compound having a polyoxyalkylene chain, and in this case, a compound having no urethane bond and urea bond (a compound produced by a method other than the above methods (a2) to (c2)) is preferred. The other compound 1 may be a compound having an aliphatic polyester chain obtained by ring-opening addition polymerization of lactone.

Examples of the other compound 1 include hydroxyalkyl (meth)acrylate, dihydroxyalkyl (meth)acrylate, lactone-modified hydroxyalkyl (meth)acrylate, polyoxyalkylene diol mono(meth)acrylate, and (meth)acrylic acid-monoepoxide adducts.

The number of carbon atoms in a hydroxyalkyl moiety of the hydroxyalkyl (meth)acrylate is preferably from 2 to 8, and more preferably from 2 to 6. The number of carbon atoms in a dihydroxyalkyl moiety of the dihydroxyalkyl (meth)acrylate is preferably from 2 to 8, and more preferably from 2 to 6. Specific examples of the hydroxyalkyl (meth)acrylate include the hydroxyalkyl (meth)acrylates exemplified as the above compound 2. Among them, 4-hydroxybutyl acrylate and 6-hydroxyhexyl acrylate are preferred in view of flexibility and low volatility.

Examples of the lactone-modified hydroxyalkyl (meth)acrylate include compounds obtained by ring-opening addition of lactones to the hydroxyalkyl (meth)acrylates exemplified as the above compound 2. The number of lactones added is preferably from 1 to 3. Examples of the lactone include ε-caprolactone, γ-butyrolactone, and γ-valerolactone.

Preferred examples of the (meth)acrylic acid-monoepoxide adducts include reaction products of (meth)acrylic acid and glycidyl ethers or glycidyl esters, such as (meth)acrylic acid and phenyl glycidyl ether.

Among these, hydroxyalkyl (meth)acrylate and (meth)acrylic acid-monoepoxide adducts are preferred from the viewpoints that they are easily available industrially and contain few impurities.

Only one type of the other compound 1 may be used, or two or more types thereof may be used in combination.

When the curable composition contains the other compound 1, the content of the other compound 1 with respect to the total mass of the curable composition is preferably from 1 to 20% by mass, and more preferably from 1 to 15% by mass. When the content of the other compound 1 is equal to or more than the above lower limit value, the effects of improving adhesion by adding the other compound 1 are obtained easily and sufficiently. When the content of the other compound 1 is equal to or less than the above upper limit value, favorable physical properties in view of low curing shrinkage are likely to be obtained.

The other compound 2 is a compound other than the polyether compound C and the other compound 1, and is preferably a compound having one (meth)acryloyloxy group and not containing a urethane bond.

As the other compound 2, a (meth)acrylate having a long-chain alkyl group with 8 or more carbon atoms and a (meth)acrylate having an amide group are preferred. Examples of the other compound 2 other than these include an alkyl (meth)acrylate having 7 or less carbon atoms, an alkoxyalkyl (meth)acrylate, and a (meth)acrylate having an aliphatic cyclic hydrocarbon group.

When the curable composition contains a long-chain alkyl (meth)acrylate having 8 or more carbon atoms, at the time of forming a cured product by a method in which the curable composition is sealed under reduced pressure and cured in a higher pressure atmosphere (method of sealing under reduced pressure and curing under increased pressure), air bubbles in the cured product tend to disappear. The number of carbon atoms in the long-chain alkyl group is preferably from 8 to 22, and more preferably from 8 to 18.

Examples of the long-chain alkyl (meth)acrylate include lauryl (meth)acrylate, isostearyl (meth)acrylate, and isodecyl (meth)acrylate. Among these, lauryl acrylate and isostearyl acrylate are preferred in view of flexibility, low viscosity, and low crystallinity.

As the (meth)acrylate having an amide group, a compound in which a hydrogen atom bonded to a nitrogen atom of (meth)acrylamide is substituted with a hydrocarbon group such as an alkyl group or a divalent organic group is preferred, since it is easy to suppress whitening of the cured product of the curable composition under hygrothermal conditions. Examples of the (meth)acrylamide derivative include 4-(meth)acryloyl morpholine, N,N-dimethyl (meth)acrylamide, and N,N-diethyl (meth)acrylamide.

Only one type of the other compound 2 may be used, or two or more types thereof may be used in combination.

When the curable composition contains the other compound 2, the content of the other compound 2 with respect to the total mass of the curable composition is preferably from 1 to 30% by mass, and more preferably from 1 to 25% by mass. When the content of the other compound 2 is equal to or more than the above lower limit value, the effects of adding the other compound 2 are obtained easily and sufficiently. When the content of the other compound 2 is equal to or less than the above upper limit value, favorable physical properties in view of low curing shrinkage are likely to be obtained.

The curable composition may be a photocurable composition or a thermosetting composition. A photocurable composition is preferred because it can be cured at a low temperature and has a fast curing rate. When the curable composition is a photocurable composition, it is preferable to contain a photopolymerization initiator. In the case of a photocurable composition, for example, since high temperatures are not required, when used for producing a display device, there is little risk of damage to the display device due to high temperatures.

Examples of the photopolymerization initiator include acetophenone-based, ketal-based, benzoin or benzoin ether-based, phosphine oxide-based, benzophenone-based, thioxanthone-based, and quinone-based photopolymerization initiators. Of these, a phosphine oxide-based or thioxanthone-based photopolymerization initiator is preferred, and a phosphine oxide-based photopolymerization initiator is preferred because coloring after the photopolymerization reaction is easily suppressed. One type of the photopolymerization initiator may be used alone, or two or more types thereof may be used in combination.

The photopolymerization initiator is not particularly limited, and commercially available products can also be used. Examples of commercially available products include IRGACURE 819, IRGACURE TPO, IRGACURE 184, IRGACURE 2959, IRGACURE 1173, IRGACURE 127, IRGACURE 907, IRGACURE OXE01, and IRGACURE OXE02 manufactured by BASF Corporation.

When the curable composition contains a photopolymerization initiator, the content of the photopolymerization initiator is preferably from 0.01 to 10 parts by mass, and more preferably from 0.1 to 5 parts by mass, with respect to a total of 100 parts by mass of curable components.

Examples of other components include tackifiers such as rosin esters, terpene phenols, and hydrogenated terpene phenols, plasticizers such as adipates and phthalates, polyether compounds having no polymerizable unsaturated group, and polyether polyols with alkoxylated molecular terminals. When the curable composition contains a plasticizer, flexibility and adhesion are likely to be improved. The content of these compounds with respect to the total mass of the curable composition is preferably 48% by mass or less, and more preferably 28% by mass or less.

Examples of other components include polymerization inhibitors, photocuring accelerators, chain transfer agents, light stabilizers (such as ultraviolet absorbers and radical scavengers), antioxidants, flame retardants, adhesion improvers (such as silane coupling agents), pigments, and dyes. Among these, it is preferable to include a polymerization inhibitor and a light stabilizer. In particular, by including a polymerization inhibitor in an amount smaller than that of the polymerization initiator, the storage stability of the curable composition can be improved, and the molecular weight after curing can also be easily adjusted.

Examples of the polymerization inhibitor include hydroquinone-based (such as 2,5-di-tert-butylhydroquinone), catechol-based (such as p-tert-butylcatechol), anthraquinone-based, phenothiazine-based, and hydroxytoluene-based polymerization inhibitors.

The ultraviolet absorber is used in order to prevent photodegradation of the curable composition and improve the weather resistance. Examples of the ultraviolet absorber include benzotriazole-based, triazine-based, benzophenone-based, and benzoate-based ultraviolet absorbers. As the benzotriazole-based ultraviolet absorber, for example, those described in paragraph [0076] of International Patent Publication No. 2014/017328 can be used.

The light stabilizer is used in order to prevent photodegradation of the curable composition and improve the weather resistance. Examples of the light stabilizer include a hindered amine-based light stabilizer. As the hindered amine-based light stabilizer, those described in paragraph [0077] of International Patent Publication No. 2014/017328 can be used.

The antioxidant is used in order to prevent oxidation of the curable composition and improve the weather resistance and heat resistance. Examples of the antioxidant include phenolic and phosphorus-based antioxidants. As the phenolic antioxidant, for example, those described in paragraph [0078] of International Patent Publication No. 2014/017328 can be used. As the phosphorus-based antioxidant, for example, those described in paragraph [0078] of International Patent Publication No. 2014/017328 can be used.

In addition, products in which multiple antioxidants, light stabilizers, and the like are mixed can also be used. Examples thereof include IRGASTAB PUR68 and TINUVIN B75 manufactured by BASF Corporation.

When the curable composition contains other components, the total content of the other components is preferably 100 parts by mass or less, more preferably 40 parts by mass or less, and still more preferably 35 parts by mass or less, with respect to 100 parts by mass of the curable component.

The content of the chain transfer agent in the curable composition is preferably low, is preferably 3 parts by mass or less, and more preferably 2 parts by mass or less, with respect to 100 parts by mass of the curable component, and it is particularly preferable that the chain transfer agent is not contained.

### (Applications of curable composition containing polyether compound having polymerizable unsaturated group)

As applications of the curable composition containing the polyether compound C, various building materials, packaging materials, printing materials, display materials, electrical and electronic component materials, optical component materials, and pressure-sensitive adhesives in the field of liquid crystal panels, and the like are suitable.

The double metal cyanide complex catalyst of the present invention has a 50% cumulative volume particle diameter of 0.01 to 4.0 µm as determined from a volume-based cumulative particle size distribution obtained by a laser diffraction scattering method, and the content of the particles having a particle diameter of 11 µm or more with respect to the total volume of the above double metal cyanide complex catalyst is 10% by volume or less, thereby improving the filterability of a composition containing a polyether compound produced using the above double metal cyanide complex catalyst. In addition, the filterability of a composition containing a polyether compound having a reactive silicon group, a composition containing a polyether compound having a urethane bond, and a composition containing a polyether compound having a polymerizable unsaturated group, all of which are produced from the above composition containing a polyether compound, is also improved. In addition, the filterability is further improved by controlling parameters such as (D₉₀ - D₁₀)/D₅₀ and D₉₀/D₁₀.

It should be noted that as mentioned above, when the inventors of the present application produced a polyether compound using the DMC catalyst described in Patent Document 1 and purified it by filtration, they found that there were problems of slow filtration rate and occurrence of clogging. Therefore, it can be concluded that the DMC catalyst described in Patent Document 1 has a 50% cumulative volume particle diameter of 0.01 to 4.0 µm as determined from a volume-based cumulative particle size distribution obtained by a laser diffraction scattering method, and the content of the particles having a particle diameter of 11 µm or more with respect to the total volume of the DMC catalyst is not 10% by volume or less. In particular, it is considered that in the DMC catalyst described in Patent Document 1, the content of the particles having a particle diameter of 11 µm or more with respect to the total volume of the DMC catalyst is not 10% by volume or less. The characteristic that the content of the particles having a particle diameter of 11 µm or more with respect to the total volume of the DMC catalyst is 10% by volume or less can be determined by a laser diffraction scattering method as described below, but it is extremely difficult to determine (impossible to determine) by observation or the like with an electron microscope such as a scanning electron microscope.

For example, a spherical particle with a diameter of 1 µm (hereinafter also referred to as a "particle A") and a spherical particle with a diameter of 11.1 µm (hereinafter also referred to as a "particle B") are considered. In this case, the volume of the particle A is 0.52 µm³ ((4π/3) × 0.5³), and the volume of the particle B is 716 µm³ ((4π/3) × 5.55³), so the volumes are significantly different. It is assumed to consist of 89% by volume of particle A and 11% by volume of particle B. If the number of particles A is X and the number of particles B is Y, since a relationship of (0.52 µm³ × X)/(716 µm³ × Y) = 89/11 holds true, X/Y = 11141. That is, even if the number of particles A is 11141 and the number of particles B is 1, a configuration of "the content of particles having a particle diameter of 11 µm or more is 10% by volume or less" is not satisfied. On the other hand, when the number of particles A is 11141 and the number of particles B is 1, it is a level that is sufficiently judged to be "uniform particles having a particle diameter of 1 µm" in the observation with an electron microscope such as a scanning electron microscope, and considering from this point of view, even if the level is judged to be "high uniformity of particle diameter" in the observation with an electron microscope such as a scanning electron microscope, it is unclear whether or not the characteristic of "the content of particles having a particle diameter of 11 µm or more is 10% by volume or less" is satisfied. It should be noted that when the particle diameter of particle A is 2.5 µm, the above calculation of X/Y is 706, and in this case, the number of particles A is 706 and the number of particles B is 1, and in this case, it is also a level that is sufficiently judged to be "uniform particles having a particle diameter of 2.5 µm". Furthermore, in the case of observation with an electron microscope such as a scanning electron microscope, the size of particles outside the selected field of view is not taken into consideration. It should be noted that in the above description, the particle diameter of particle B was set to 11.1 µm, which is close to the lower limit value, but if this particle diameter is further increased, X/Y will become even larger.

### EXAMPLES

The present invention will be specifically described below with reference to Examples, but the present invention is not limited by the following description.

### [Particle size distribution (laser diffraction scattering method)]

The particle size distribution of DMC catalyst particles before use in the polymerization reaction was measured by a laser diffraction scattering method. More specifically, a DMC catalyst was dispersed in methanol, and the particle size distribution of the obtained dispersion liquid was measured using a particle size distribution measuring device (SALD-2300 manufactured by Shimadzu Corporation) to obtain a volume-based cumulative particle size distribution. From the obtained cumulative particle size distribution, D_{X}, the content of particles with a particle diameter of 11 µm or more with respect to the total volume of the DMC catalyst, and the content of particles with a particle diameter of 0.15 to 1 µm with respect to the total volume of the DMC catalyst were determined.

### [Particle size distribution (dynamic light scattering particle size distribution measurement)]

The particle size distribution in a reaction liquid containing the polyether compound and DMC catalyst produced in Cases 1 to 10 described later was measured by dynamic light scattering particle size distribution measurement. More specifically, the particle size distribution of the reaction liquid containing the polyether compound and DMC catalyst was measured by using a dynamic light scattering measuring device (NANOTRAC WAVE II-UT151: particle size distribution measuring device manufactured by MicrotracBEL Corporation) and selecting methanol as a dispersion solvent, and the light intensity-based cumulative particle size distribution and the light intensity-based cumulative particle size distribution within a range of 0.1 to 6.5 µm were obtained. From the obtained volume-based cumulative particle size distribution, d₅₀ was determined, and the peak particle diameter and d₅₀' were obtained from the light intensity-based cumulative particle size distribution within a range of 0.1 to 6.5 µm.

### [Hydroxyl value and hydroxyl value-equivalent molecular weight]

A hydroxyl value was calculated in accordance with a Method B in JIS K 1557-1:2007. A hydroxyl value-equivalent molecular weight was calculated based on a formula of "56,100/hydroxyl value of polyether compound × number of hydroxyl groups of polyether compound".

### [Mn, Mw, Mw/Mn]

For several types of monodisperse polystyrene with different degrees of polymerization as standard samples for molecular weight measurement, the measurement was performed using a gel permeation chromatograph analyzer HLC-8420 GPC (a product name, manufactured by Tosoh Corporation), and a calibration curve was produced based on the relationship between the molecular weight of polystyrene and retention time. A polyether compound, a polyether compound having a reactive silicon group, or a polyether compound having a polymerizable unsaturated group was diluted to 0.5% by mass with tetrahydrofuran and passed through a filter with a pore size of 0.5 µm to obtain a measurement sample. Mw, Mn and Mw/Mn were determined by using the obtained measurement sample and tetrahydrofuran as a solvent, setting the sample pump to a flow rate of 0.350 mL/min, the reference pump to a flow rate of 0.350 mL/min, the detector temperature to 40°C and the collection time to 6 to 15 minutes, and analyzing the peaks appearing between collection times of 6 and 11 minutes.

### [Total degree of unsaturation]

The total degree of unsaturation of a polyether compound was measured in accordance with JIS K 1557-3:2007.

### [Viscosity]

The viscosity of a polyether compound, a polyether compound having a reactive silicon group, a polyether compound having a urethane bond, and a polyether compound having a polymerizable unsaturated group was measured using an E-type viscometer (RE85U (product name), manufactured by Toki Sangyo Co., Ltd.) under conditions at a measurement temperature of 25°C with a rotor No. 1.

### [Filterability: polyether compound]

A glass filter container was attached to a weighed container, and a 5.0 µm filter paper (PTFE filter, diameter: 47 mm) was further attached thereto. A sample obtained by adding 100 g of a reaction liquid containing the polyether compound and DMC catalyst obtained in Cases 1 to 10 described later to 100 g of methyl ethyl ketone as a dilution solvent was poured from the upper surface of the filter paper and filtered. Natural filtration was carried out for 30 minutes, and the amount of the filtered sample was weighed. The larger the amount of the filtered sample, the better the filterability. When the amount of the filtered sample is 15.0 g or more, the filterability is judged to be favorable, and when the amount of the filtered sample is less than 15.0 g, the filterability is judged to be poor.

### [Filterability: polyether compound having reactive silicon group]

A glass filter container was attached to a weighed container, and a 5.0 µm filter paper (PTFE filter, diameter: 25 mm) was further attached thereto. A sample obtained by adding 10 g of a reaction liquid containing the polyether compound having a reactive silicon group and the DMC catalyst obtained in Cases 1A to 6A described later to 10 g of methyl ethyl ketone as a dilution solvent was poured from the upper surface of the filter paper and filtered. Natural filtration was carried out for 30 minutes, and the amount of the filtered sample was weighed. The larger the amount of the filtered sample, the better the filterability. When the amount of the filtered sample is 3.00 g or more, the filterability is judged to be favorable, and when the amount of the filtered sample is less than 3.00 g, the filterability is judged to be poor.

### [Filterability: polyether compound having urethane bond]

A glass filter container was attached to a weighed container, and a 5.0 µm filter paper (PTFE filter, diameter: 25 mm) was further attached thereto. A sample obtained by adding 10 g of a reaction liquid containing the polyether compound having a urethane bond and the DMC catalyst obtained in Cases 1B to 6B described later to 10 g of methyl ethyl ketone as a dilution solvent was poured from the upper surface of the filter paper and filtered. Natural filtration was carried out for 30 minutes, and the amount of the filtered sample was weighed. The larger the amount of the filtered sample, the better the filterability. When the amount of the filtered sample is 2.00 g or more, the filterability is judged to be favorable, and when the amount of the filtered sample is less than 2.00 g, the filterability is judged to be poor.

### [Filterability: polyether compound having polymerizable unsaturated group]

A glass filter container was attached to a weighed container, and a 5.0 µm filter paper (PTFE filter, diameter: 25 mm) was further attached thereto. A sample obtained by adding 10 g of a reaction liquid containing the polyether compound having a polymerizable unsaturated group and the DMC catalyst obtained in Cases 1C to 6C described later to 10 g of methyl ethyl ketone as a dilution solvent was poured from the upper surface of the filter paper and filtered. Natural filtration was carried out for 30 minutes, and the amount of the filtered sample was weighed. The larger the amount of the filtered sample, the better the filterability. When the amount of the filtered sample is 2.5 g or more, the filterability is judged to be favorable, and when the amount of the filtered sample is less than 2.5 g, the filterability is judged to be poor.

### [Number of reactive silicon groups]

The number of reactive silicon groups (silylation rate) contained in the polyether compound having a reactive silicon group was measured by a ¹H-NMR internal standard method.

### [Stretch durability: polyether compound having reactive silicon group]

A test was conducted in accordance with a fatigue resistance category CR90 of a fatigue resistance test described in section 5.22 of JIS A 1439:2016. Anodized aluminum whose surface had been treated with a primer (MP-2000, a product name, manufactured by Cemedine Co., Ltd.) was used as an adherend. The modulus, which was the stress when stretched by 50% (shown as "M50" in Table 4, unit: N/mm²), the tensile strength as the maximum cohesive strength (shown as "Tmax" in Table 4, unit: N/mm²), and the maximum elongation (shown as "Emax" in Table 4, unit: %) were measured. Cracks in a cured product in the vicinity of the adhesive interface between the adherend and the cured product were observed every 500 stretches, and the number of stretches (shown as "durability" in Table 4, unit: times) at which the cracks reached 2.5 mm or more was recorded. The larger the number of stretches, the better the stretch durability.

### [Tensile properties: polyether compound having reactive silicon group]

1 part by mass of dibutyltin dilaurate was added with respect to 100 parts by mass of polyether compounds A-1 to A-6 having a reactive silicon group obtained in Cases 1A to 6A and mixed thoroughly, and then the resulting mixture was degassed in vacuum and then coated with a thickness of 100 µm on a film using an applicator, followed by curing at 23°C and a relative humidity of 50% for 5 days and at 50°C for 3 days to obtain a dumbbell-shaped No. 3 test piece as a cured product.

A tensile test was carried out at a tension speed of 100 mm/min using the above test specimen in accordance with a tensile test method for vulcanized rubber in JIS K 6251:2017, and the stress when stretched by 50% (shown as "M50" in Table 3, unit: MPa), the maximum tensile strength (shown as "Tmax" in Table 3, unit: MPa), and the maximum elongation (shown as "Emax" in Table 3, unit: %) were measured. The higher the values of M50 and Tmax, the higher the tensile strength. The higher the value of Emax, the better the elongation properties.

### [Isocyanate group content]

The content of isocyanate groups with respect to the total mass of the polyether compound having a urethane bond was measured in accordance with JIS K 7301:1995.

### <DMC catalyst>

In the following, Production Example 1 is an Example of the present invention, and Production Examples 2 to 4 are Comparative Examples.

### [Production Example 1]

In the presence of a KOH catalyst, propylene oxide (hereinafter also referred to as "PO") was polymerized with propylene glycol, followed by dealkalization and purification to obtain polyoxypropylene diol (hereinafter also referred to as a "polyol P1"). The average number of hydroxyl groups per molecule of the polyol P1 was 2, and Mn was 1,000. An aqueous zinc chloride solution composed of 10.2 g of zinc chloride and 10 g of water was prepared in a 500 mL flask. While the aqueous zinc chloride solution was stirred at 300 rpm using a half-moon type stirring blade with a diameter of 80 mm, an aqueous potassium hexacyanocobaltate solution composed of 4.2 g of potassium hexacyanocobaltate and 75 g of water was added dropwise to the aqueous zinc chloride solution at a constant rate over 90 minutes. During this time, the mixed solution in the flask was kept at 40°C. After completing the dropwise addition of the aqueous potassium hexacyanocobaltate solution, the mixture in the flask was further stirred for 30 minutes, and then a mixture composed of 80 g of tert-butyl alcohol (hereinafter also referred to as "TBA"), 80 g of water, and 0.6 g of the polyol P1 were added thereto, and the resulting mixture was stirred at 40°C for 30 minutes and was further stirred at 60°C for 60 minutes. The obtained mixture was filtered under pressure (0.25 MPa) using a circular filter plate with a diameter of 125 mm and quantitative filter paper for fine particles (No. 5C (product name) manufactured by Advantec Toyo Kaisha, Ltd.) to obtain a solid containing a double metal cyanide complex (hereinafter referred to as a "filter cake").

The filter cake was transferred to a flask, a liquid mixture composed of 36 g of TBA and 84 g of water was added thereto, and the resulting mixture was stirred for 30 minutes, and was then filtered under pressure under the same conditions as described above. The obtained filter cake was transferred to a flask, and a liquid mixture composed of 108 g of TBA and 12 g of water was further added and stirred for 30 minutes to obtain a dispersion liquid in which the double metal cyanide complex catalyst was dispersed in a TBA-water mixture. 120 g of the polyol P1 was added to the dispersion liquid, and then volatile components were removed by distillation under reduced pressure at 80°C for 3 hours, and then the volatile components were further removed by distillation at 115°C for 3 hours to obtain a slurry A of a TBA-DMC catalyst. The concentration of the TBA-DMC catalyst contained in the slurry A of the TBA-DMC catalyst was 5.33% by mass. The particle size distribution of the obtained TBA-DMC catalyst was measured. D_{X}, the content of particles with a particle diameter of 11 µm or more with respect to the total volume of the TBA-DMC catalyst, the content of particles with a particle diameter of 0.15 to 1 µm with respect to the total volume of the TBA-DMC catalyst, (D₉₀ - D₁₀)/D₅₀, and D₉₀/D₁₀ are shown in Table 1 (hereinafter, the same applies to Production Examples 2 to 4). It should be noted that no particles with a particle diameter of 0.1 to 0.2 µm were observed. Further, the particle size distribution of the TBA-DMC catalyst particles within a range of 0.1 to 10 µm measured by the laser diffraction scattering method was unimodal having only one peak.

### [Production Example 2]

A 67% by mass aqueous zinc chloride solution was introduced from one side of a branch conduit connected to a first reactor with an internal volume of 600 mL, and an aqueous potassium hexacyanocobaltate solution having a concentration of 5.5% by mass was introduced from the other side, and they were merged at a branch portion immediately before the first reactor, and the combined solution was introduced into the first reactor. The aqueous zinc chloride solution and the aqueous potassium hexacyanocobaltate solution were continuously supplied at a rate of 12.3 g/min (6.83 mL/min assuming a specific gravity of 1.80 g/mL) and a rate of 31.5 g/min (31.5 mL/min assuming a specific gravity of 1.0 g/mL), respectively (Zn/Co atomic ratio = 11.5). The combined solution was stirred at 300 rpm with a stirring blade in the first reactor kept at 40°C, and then the resulting reaction liquid from the first reactor was introduced into a second reactor, which was kept at 60°C, through a conduit.

The average residence time in the first reactor was 15.7 minutes. It should be noted that this average residence time was a value calculated by dividing the volume of a portion in the first reactor where mixing and stirring were sufficiently performed (600 mL) by the rate of the supplied liquid (38.2 mL/min).

In the second reactor with an internal volume of 2,300 mL, a 50% by mass TBA aqueous solution was supplied at 63.2 g/min (71.0 mL/min assuming a specific gravity of 0.89 g/mL) at the same time as the supply of the reaction liquid. In the second reactor, the liquid was stirred at 300 rpm with a stirring blade, and a dispersion liquid produced in the second reactor was sent from the second reactor to a storage tank through a conduit and stored.

The average residence time of the liquid in the second reactor was 21.5 minutes. It should be noted that this average residence time was a value calculated by dividing the volume of a portion in the second reactor where mixing and stirring were sufficiently performed (2,300 mL) by the rate of the supplied liquid (109.3 mL/min). Further, a proportion of TBA in the steady state was 29.5% by mass with respect to the amount of liquid in the second reactor. Moreover, the amount of TBA introduced was equivalent to approximately 9.7 times the mass of zinc hexacyanocobaltate (Zn₃[Co(CN)₆]₂) calculated from the amount of potassium hexacyanocobaltate used as a raw material.

Subsequently, 1,100 g of the dispersion liquid stored in the storage tank was filtered, and a solid containing a double metal cyanide complex (hereinafter referred to as a "filter cake") was obtained in about 25 minutes.

112 g of the filter cake and 500 g of a 30% by mass TBA aqueous solution were mixed at room temperature and stirred at 300 rpm for 1 hour, after which filtration was performed, and the filter cake containing the double metal cyanide complex was separated in about 20 minutes. The content of a TBA-DMC catalyst in the filter cake was 28.0% by mass.

30 g of the filter cake was mixed with 90 g of the polyol P1 and stirred at room temperature for 3 hours, and then volatile components were removed by distillation at 80°C and under a reduced pressure of 0.005 MPa for 5 hours to obtain a slurry B of the TBA-DMC catalyst. The concentration of the TBA-DMC catalyst contained in the slurry B of the TBA-DMC catalyst was 8.53% by mass.

### [Production Example 3]

A slurry C of TBA-DMC catalyst was obtained in the same manner as in Production Example 1, with the exception that the stirring blade was changed to a half-moon type with a diameter of 40 mm in stirring the aqueous zinc chloride solution. The concentration of the TBA-DMC catalyst contained in the slurry C of the TBA-DMC catalyst was 5.50% by mass.

### [Production Example 4]

A slurry D of TBA-DMC catalyst was obtained in the same manner as in Production Example 1, with the exception that the time for dropwise adding the aqueous potassium hexacyanocobaltate solution was changed from 90 minutes to 10 minutes. The concentration of the TBA-DMC catalyst contained in the slurry D of the TBA-DMC catalyst was 5.40% by mass.

**[Table 1]**

| | | Production Example 1 | Production Example 2 | Production Example 3 | Production Example 4 |
|---|---|---|---|---|---|
| TBA-DMC catalyst slurry | | A | B | C | D |
| D₅₀ | µm | 1.98 | 10.47 | 7.05 | 6.50 |
| D₁₀ | µm | 0.90 | 3.54 | 2.57 | 2.37 |
| D₂₀ | µm | 1.21 | 5.07 | 3.51 | 3.23 |
| D₃₀ | µm | 1.48 | 6.74 | 4.51 | 4.16 |
| D₄₀ | µm | 1.73 | 8.60 | 5.72 | 5.27 |
| D₆₀ | µm | 2.26 | 12.24 | 8.34 | 7.69 |
| D₇₀ | µm | 2.58 | 14.06 | 9.62 | 8.87 |
| D₈₀ | µm | 3.01 | 16.21 | 11.08 | 10.21 |
| D₉₀ | µm | 3.82 | 19.52 | 13.22 | 12.19 |
| D₉₅ | µm | 5.16 | 22.89 | 15.32 | 14.13 |
| Amount of particles of 11 µm or more | % by volume | 2.8 | 44.0 | 20.6 | 15.6 |
| Amount of particles of 0.15 to 1 µm | % by volume | 12.0 | 0.0 | 3.11 | 3.81 |
| (D₉₀ - D₁₀)/D₅₀ | - | 1.47 | 1.53 | 1.51 | 1.51 |
| D₉₀/D₁₀ | - | 4.23 | 5.51 | 5.15 | 5.15 |

### <Polyether compound>

In the following, Cases 1, 2, 7, and 9 are Examples of the present invention, and Cases 3 to 6, 8, and 10 are Comparative Examples.

### [Case 1]

In the presence of a KOH catalyst, PO was polymerized with propylene glycol, followed by dealkalization and purification to obtain polyoxypropylene diol (hereinafter also referred to as a "polyol P2"). The average number of hydroxyl groups per molecule of the polyol P2 was 2, and Mn was 700. Using the polyol P2 as an initiator, 3,300 g of PO was polymerized in the presence of the TBA-DMC catalyst slurry A to obtain a polyether compound a-1. It should be noted that the polymerization was carried out by adding 0.1% by mass of Irganox 1010 manufactured by BASF Corporation as a stabilizer. The amount of the TBA-DMC catalyst slurry A used was an amount such that the concentration of the TBA-DMC catalyst was 44 ppm by mass with respect to the total mass of the polyether compound a-1. The hydroxyl value, hydroxyl value-equivalent molecular weight, Mn, Mw, Mw/Mn, total degree of unsaturation, and viscosity of the polyether compound a-1 are shown in Table 2 (hereinafter, Cases 2 to 10 are also shown in the same manner). In addition, the d₅₀, peak particle diameter within a range of 0.1 to 6.5 µm, and d₅₀' within a range of 0.1 to 6.5 µm measured by dynamic light scattering particle size distribution measurement for the TBA-DMC catalyst are shown in Table 2 (hereinafter, Cases 2 to 10 are also shown in the same manner). A filterability test was conducted using the obtained polyether compound a-1. The results are shown in Table 2 (hereinafter, Cases 2 to 10 are also shown in the same manner).

### [Case 2]

A polyether compound a-2 was obtained in the same manner as in Case 1, with the exception that the amount of the TBA-DMC catalyst slurry A used was changed so that the concentration of the above TBA-DMC catalyst was 30 ppm by mass.

### [Case 3]

A polyether compound a-3 was obtained in the same manner as in Case 1, with the exception that the TBA-DMC catalyst slurry B was used instead of the TBA-DMC catalyst slurry A.

### [Case 4]

A polyether compound a-4 was obtained in the same manner as in Case 3, with the exception that the amount of the TBA-DMC catalyst slurry B used was changed so that the concentration of the above TBA-DMC catalyst was 30 ppm by mass.

### [Case 5]

A polyether compound a-5 was obtained in the same manner as in Case 1, with the exception that the TBA-DMC catalyst slurry C was used instead of the TBA-DMC catalyst slurry A.

### [Case 6]

A polyether compound a-6 was obtained in the same manner as in Case 1, with the exception that the TBA-DMC catalyst slurry D was used instead of the TBA-DMC catalyst slurry A.

### [Case 7]

In the presence of a KOH catalyst, PO was polymerized with n-butyl alcohol, followed by dealkalization and purification to obtain polyoxypropylene monool (hereinafter also referred to as a "polyol P3"). The average number of hydroxyl groups per molecule of the polyol P3 was 1, and Mn was 400. Using the polyol P3 as an initiator, 3,600 g of PO was polymerized in the presence of the TBA-DMC catalyst slurry A to obtain a polyether compound a-7. It should be noted that the polymerization was carried out by adding 0.1% by mass of Irganox 1010 manufactured by BASF Corporation as a stabilizer. The amount of the TBA-DMC catalyst slurry A used was an amount such that the concentration of the TBA-DMC catalyst was 44 ppm by mass with respect to the total mass of the polyether compound a-7.

### [Case 8]

A polyether compound a-8 was obtained in the same manner as in Case 7, with the exception that the TBA-DMC catalyst slurry B was used instead of the TBA-DMC catalyst slurry A.

### [Case 9]

In the presence of a KOH catalyst, PO was polymerized with sorbitol, followed by dealkalization and purification to obtain polyoxypropylene hexaol (hereinafter also referred to as a "polyol P4"). The average number of hydroxyl groups per molecule of the polyol P4 was 6, and Mn was 874. Using the polyol P4 as an initiator, 5,126 g of PO was polymerized in the presence of the TBA-DMC catalyst slurry A to obtain a polyether compound a-9. It should be noted that the polymerization was carried out by adding 0.1% by mass of Irganox 1010 manufactured by BASF Corporation as a stabilizer. The amount of the TBA-DMC catalyst slurry A used was an amount such that the concentration of the TBA-DMC catalyst was 44 ppm by mass with respect to the total mass of the polyether compound a-9.

### [Case 10]

A polyether compound a-10 was obtained in the same manner as in Case 9, with the exception that the TBA-DMC catalyst slurry B was used instead of the TBA-DMC catalyst slurry A.

**[Table 2]**

| | | Case 1 | Case 2 | Case 3 | Case 4 | Case 5 | Case 6 | Case 7 | Case 8 | Case 9 | Case 10 |
|---|---|---|---|---|---|---|---|---|---|---|---|
| Polyether compound | | a-1 | a-2 | a-3 | a-4 | a-5 | a-6 | a-7 | a-8 | a-9 | a-10 |
| Hydroxyl value | mgKOH/g | 27.6 | 27.3 | 27.3 | 27.3 | 27.5 | 27.6 | 14.0 | 14.2 | 56.1 | 56.1 |
| Hydroxyl value-equivalent molecular weight | - | 4100 | 4100 | 4100 | 4100 | 4100 | 4100 | 4000 | 4000 | 6000 | 6000 |
| Mn | - | 5800 | 5600 | 5800 | 5700 | 5700 | 5800 | 5700 | 5800 | 8600 | 8800 |
| Mw | - | 6100 | 6000 | 6200 | 6100 | 6000 | 6100 | 6000 | 6100 | 9000 | 9200 |
| Mw/Mn | - | 1.049 | 1.055 | 1.058 | 1.070 | 1.057 | 1.057 | 1.048 | 1.056 | 1.049 | 1.060 |
| Viscosity | mPa·s/25°C | 900 | 920 | 910 | 890 | 900 | 920 | 910 | 920 | 980 | 1000 |
| Total degree of unsaturation | meq/g | 0.006 | 0.006 | 0.007 | 0.007 | 0.007 | 0.007 | 0.007 | 0.007 | 0.007 | 0.007 |
| d₅₀ | nm | 3.61 | 3.62 | 3.31 | 3.31 | 3.46 | 3.51 | 3.62 | 3.55 | 3.46 | 3.51 |
| Peak particle diameter within a range of 0.1 to 6.5 µm | µm | 0.91 | 0.70 | 1.31 | 1.21 | 1.14 | 1.11 | 0.86 | 1.24 | 0.69 | 1.20 |
| d₅₀' within a range of 0.1 to 6.5 µm | µm | 0.93 | 0.71 | 1.34 | 1.23 | 1.17 | 1.13 | 0.88 | 1.26 | 0.70 | 1.22 |
| Filterability | g | 17.4 | 29.6 | 9.9 | 11.1 | 12.5 | 13.2 | 19.0 | 10.5 | 28.0 | 10.0 |

As shown in Table 2, it was found that filterability was improved in Cases 1, 2, 7, and 9 compared to Cases 3 to 6, 8, and 10. It should be noted that the d₅₀ in the reaction liquid was more or less the same in Cases 1 to 10 (if anything, the d₅₀ in Cases 4 to 6 was slightly smaller than the d₅₀ in Cases 1 and 2. Further, the d₅₀ in Case 8 was slightly smaller than the d₅₀ in Case 7), and it was found that most of the particles were extremely small. Further, this d₅₀ is extremely small compared to the pore size of the filter paper (5.0 µm). That is, it is an unexpected effect that the filterability differs while having similar levels of d₅₀. It is considered that the difference in filterability is due to the peak particle diameter and d₅₀' within the range of 0.1 to 6.5 µm based on the trace components in the reaction liquid. On the other hand, the difference in the peak particle diameter and d₅₀' within the range of 0.1 to 6.5 µm between Cases 1, 2, 7, and 9 and Cases 3 to 6, 8, and 10 is a small difference, and it is an unexpected effect that the filterability differs due to such a small difference. Further, it was found that in order to control the peak particle diameter and d₅₀' within the range of 0.1 to 6.5 µm, it is effective to adjust the D₅₀ of the TBA-DMC catalyst before polymerization and the content of particles having a particle diameter of 11 µm or more with respect to the total volume of the TBA-DMC catalyst before polymerization. Furthermore, the Mw/Mn of the polyether compounds a-1, a-2, a-7, and a-9 was smaller than the Mw/Mn of the polyether compounds a-3 to a-6, a-8, and a-10, and it was thought that this small Mw/Mn also contributed to the improvement of filterability.

### <Polyether compound having reactive silicon group>

In the following, Cases 1A, 2A, and 7A are Examples of the present invention, and Cases 3A to 6A and 8A are Comparative Examples.

### [Case 1A]

0.0075 g of Neostann U-860 (manufactured by Nitto Kasei Co., Ltd.) and 14.5 g of 3-isocyanatopropyltriethoxysilane (NCO content: 20.5% by mass) were added to 150 g of the polyether compound a-1 in a composition containing the polyether compound a-1 obtained in Case 1, a TBA-DMC catalyst, and a stabilizer, and reacted at 80°C for 3 hours. It should be noted that a molar ratio (NCO/OH) of the amount of isocyanate in 3-isocyanatopropyltriethoxysilane with respect to the amount of hydroxyl groups in the polyether compound a-1 was set to 0.97. The reaction was terminated when it was confirmed by IR that there was no absorption due to NCO. The Mn, Mw, Mw/Mn, viscosity, and silylation rate of the obtained polyether compound A-1 having a reactive silicon group are shown in Table 3 (hereinafter, Cases 2A to 6A are also shown in the same manner). Using the obtained polyether compound A-1 having a reactive silicon group, a filterability test and an evaluation of tensile properties were performed. The results are shown in Table 3 (hereinafter, Cases 2A to 6A are also shown in the same manner).

### [Case 2A]

A polyether compound A-2 having a reactive silicon group was obtained in the same manner as in Case 1A, with the exception that a composition containing the polyether compound a-2 obtained in Case 2, a TBA-DMC catalyst, and a stabilizer was used instead of the composition containing the polyether compound a-1, a TBA-DMC catalyst, and a stabilizer.

### [Case 3A]

A polyether compound A-3 having a reactive silicon group was obtained in the same manner as in Case 1A, with the exception that a composition containing the polyether compound a-3 obtained in Case 3, a TBA-DMC catalyst, and a stabilizer was used instead of the composition containing the polyether compound a-1, a TBA-DMC catalyst, and a stabilizer.

### [Case 4A]

A polyether compound A-4 having a reactive silicon group was obtained in the same manner as in Case 1A, with the exception that a composition containing the polyether compound a-4 obtained in Case 4, a TBA-DMC catalyst, and a stabilizer was used instead of the composition containing the polyether compound a-1, a TBA-DMC catalyst, and a stabilizer.

### [Case 5A]

A polyether compound A-5 having a reactive silicon group was obtained in the same manner as in Case 1A, with the exception that a composition containing the polyether compound a-5 obtained in Case 5, a TBA-DMC catalyst, and a stabilizer was used instead of the composition containing the polyether compound a-1, a TBA-DMC catalyst, and a stabilizer.

### [Case 6A]

A polyether compound A-6 having a reactive silicon group was obtained in the same manner as in Case 1A, with the exception that a composition containing the polyether compound a-6 obtained in Case 6, a TBA-DMC catalyst, and a stabilizer was used instead of the composition containing the polyether compound a-1, a TBA-DMC catalyst, and a stabilizer.

**[Table 3]**

| | | Case 1A | Case 2A | Case 3A | Case 4A | Case 5A | Case 6A |
|---|---|---|---|---|---|---|---|
| Polyether compound having a reactive silicon group | | A-1 | A-2 | A-3 | A-4 | A-5 | A-6 |
| Mn | - | 6600 | 6400 | 6500 | 6400 | 6400 | 6400 |
| Mw | - | 7300 | 7200 | 7200 | 7100 | 7200 | 7200 |
| Mw/Mn | - | 1.109 | 1.127 | 1.101 | 1.113 | 1.110 | 1.110 |
| Viscosity | mPa·s/25°C | 1600 | 1600 | 1700 | 1600 | 1600 | 1600 |
| Silylation rate | % | 97 | 97 | 97 | 97 | 97 | 97 |
| Filterability | g | 4.64 | 7.90 | 1.70 | 1.90 | 2.26 | 2.65 |
| M50 | N/mm² | 1.03 | 1.02 | 1.02 | 1.02 | 1.03 | 1.03 |
| Tmax | N/mm² | 1.67 | 1.64 | 1.39 | 1.37 | 1.51 | 1.53 |
| Emax | % | 99 | 95 | 82 | 80 | 88 | 89 |

### [Case 7A]

A polyether compound a-11 was obtained by polymerizing 14,300 g of PO in the presence of the TBA-DMC catalyst slurry A using the polyol P2 as an initiator. It should be noted that the polymerization was carried out by adding 0.1% by mass of Irganox 1076 manufactured by BASF Corporation as a stabilizer. The amount of the TBA-DMC catalyst slurry A used was an amount such that the concentration of the TBA-DMC catalyst was 50 ppm by mass with respect to the total mass of the polyether compound a-11. The hydroxyl value, hydroxyl value-equivalent molecular weight, Mn, Mw, Mw/Mn, total degree of unsaturation, and viscosity of the polyether compound a-11 are shown in Table 4 (hereinafter, Case 8A is also shown in the same manner).

The polyether compound a-11 was alcoholated by adding 1.05 molar equivalents of a methanol solution of sodium methoxide with respect to the hydroxyl groups of the polyether compound a-11 in a composition containing the polyether compound a-11, a TBA-DMC catalyst, and a stabilizer. Then, methanol was removed by distillation by heating under reduced pressure, and an excess amount of allyl chloride was further added with respect to the amount of hydroxyl groups in the polyether compound a-11 to convert the terminal group into an allyloxy group. Subsequently, in the presence of hexachloroplatinic (IV) acid hexahydrate, 0.77 molar equivalents of dimethoxymethylsilane were added with respect to the converted allyloxy group in the polyether compound a-11, and reacted at 70°C for 5 hours to obtain a polyether compound A-7 having a reactive silicon group. The Mn, Mw, Mw/Mn, and silylation rate of the obtained polyether compound A-7 having a reactive silicon group are shown in Table 4 (hereinafter, Case 8A is also shown in the same manner).

### [Case 8A]

A polyether compound a-12 and a polyether compound A-8 having a reactive silicon group were obtained in the same manner as in Case 7A, with the exception that the TBA-DMC catalyst slurry B was used instead of the TBA-DMC catalyst slurry A in producing the polyether compound a-11.

**[Table 4]**

| | | Case 7A | Case 8A |
|---|---|---|---|
| Polyether compound having a hydroxyl group | | a-11 | a-12 |
| Hydroxyl value | mgKOH/g | 7.5 | 7.5 |
| Hydroxyl value-equivalent molecular weight | - | 14960 | 14960 |
| Mn | - | 22000 | 22000 |
| Mw | - | 22660 | 24200 |
| Mw/Mn | - | 1.030 | 1.100 |
| Viscosity | mPa·s/25°C | 11700 | 12900 |
| Total degree of unsaturation | meq/g | 0.007 | 0.007 |
| Polyether compound having a reactive silicon group | | A-7 | A-8 |
| Mn | - | 22000 | 22000 |
| Mw | - | 22660 | 24200 |
| Mw/Mn | - | 1.030 | 1.100 |
| Silylation rate | % | 77 | 77 |
| M50 | N/mm² | 0.18 | 0.19 |
| Tmax | N/mm² | 0.79 | 0.84 |
| Emax | % | 774 | 787 |
| Durability | Times | 2000 | 1500 |

### (Other components)

The additives listed in Tables 5 and 6 are as follows.

HAKUENKA CCR: a product name of colloidal calcium carbonate, manufactured by Shiraishi Kogyo Kaisha, Ltd.

WHITON SB: a product name of heavy calcium carbonate, manufactured by Shiraishi Kogyo Kaisha, Ltd.

R820: a product name of titanium oxide, manufactured by Ishihara Sangyo Kaisha, Ltd.

PREMINOL S 4012: a product name of a high molecular weight polyol with two hydroxyl groups per molecule and an Mn of 13,000, manufactured by AGC Inc.

SANSO CIZER EPS: a product name of 4,5-epoxycyclohexane-1,2-dicarboxylic acid-di-2-ethylhexyl, manufactured by New Japan Chemical Co., Ltd.

DISPARLON 305: a product name of a hydrogenated castor oil-based thixotropic agent, manufactured by Kusumoto Chemicals, Ltd.

Balloon 80GCA: a product name of organic balloon, manufactured by Matsumoto Yushi-Seiyaku Co., Ltd.

M309: ARONIX M-309, a product name of a photocurable resin, manufactured by Toagosei Co., Ltd.

KBM-403: a product name of 2-glycidyloxypropyltrimethoxysilane, manufactured by Shin-Etsu Chemical Co., Ltd.

IRGANOX 1135: a product name of a hindered phenolic antioxidant, manufactured by BASF Corporation.

TINUVIN 326: a product name of a benzotriazole-based ultraviolet absorber, manufactured by BASF Corporation.

Tung oil: an air oxidation curable compound, manufactured by Kimura Corporation.

Stanoct: a product name of stannous octoate, manufactured by Yoshitomi Pharmaceutical Industries, Ltd.

Laurylamine: a reagent manufactured by Junsei Chemical Co., Ltd.

DINP: SANSO CIZER DINP, a product name of diisononyl phthalate, manufactured by New Japan Chemical Co., Ltd.

Glomax LL: a product name of calcined kaolin, manufactured by Takehara Kagaku Kogyo Co., Ltd.

**[Table 5]**

| | Product name | Parts by mass |
|---|---|---|
| Filler | HAKUENKA CCR | 45 |
| | WHITON SB | 165 |
| | R820 | 10 |
| Plasticizer | PREMINOL S 4012 | 50 |
| | SANSO CIZER EPS | 25 |
| Anti-sagging agent | DISPARLON 305 | 4 |
| Hollow body | Balloon 80GCA | 1.5 |
| Acrylate | M309 | 3 |
| Adhesion-imparting agent | KBM-403 | 1 |
| Antioxidant | IRGANOX 1135 | 1 |
| Ultraviolet absorber | TINUVIN 326 | 1 |
| Air oxidation curable compound | Tung oil | 4 |
| Total | | 310.5 |

**[Table 6]**

| | Product name | Parts by mass |
|---|---|---|
| Catalyst | Stanoct/ laurylamine = 6/1 | 4 |
| Plasticizer | DINP | 6 |
| Filler | WHITON SB | 15 |
| Kaolin | Glomax LL | 5 |
| Total | | 30 |

### <Preparation of curable composition>

100 parts by mass of the polyether compounds A-7 and A-8 having a reactive silicon group and obtained in Cases 7A and 8A were mixed with additives in the amounts (parts by mass) shown in Table 5 to prepare main agent compositions. This main agent composition was mixed with a curing agent composition in an amount shown in Table 6, and the stretch durability was evaluated. The results are shown in Table 4.

As shown in Table 3, it was found that filterability was improved in Cases 1A and 2A compared to Cases 3A to 6A. It should be noted that in Cases 1A to 6A, the d₅₀ in the compositions (reaction liquids) containing the polyether compound, a TBA-DMC catalyst, and a stabilizer was more or less the same (if anything, the d₅₀ in Cases 4 to 6 was slightly smaller than the d₅₀ in Cases 1 and 2), and it was found that most of the particles were extremely small. In addition, since the TBA-DMC catalyst does not contribute to the silylation reaction, the particle diameter in the reaction liquid during the production of the polyether compound having a reactive silicon group is also considered to be of the same order of magnitude. Further, this d₅₀ is extremely small compared to the pore size of the filter paper (5.0 µm). That is, it is an unexpected effect that the filterability differs while having similar levels of d₅₀. It is considered that the difference in filterability is due to the peak particle diameter and d₅₀' within the range of 0.1 to 6.5 µm based on the trace components in the reaction liquid. On the other hand, in Cases 1A and 2A and Cases 3A to 6A, the difference in the peak particle diameter and d₅₀' within the range of 0.1 to 6.5 µm in the composition (reaction liquid) containing the polyether compound, a TBA-DMC catalyst, and a stabilizer is a small difference, and it is an unexpected effect that such a small difference causes a difference in filterability. Further, it was found that in order to control the peak particle diameter and d₅₀' within the range of 0.1 to 6.5 µm, it is effective to adjust the D₅₀ of the TBA-DMC catalyst before the polymerization reaction and the content of particles having a particle diameter of 11 µm or more with respect to the total volume of the TBA-DMC catalyst before the polymerization reaction. In addition, it was found that compared to Cases 3A to 6A, the strength and elongation of the cured product were excellent in Cases 1A and 2A. Further, as shown in Table 4, it was found that compared to Case 8A, the stretch durability of the obtained cured product was improved in Case 7A.

### <Polyether compound having urethane bond>

In the following, Cases 1B and 2B are Examples of the present invention, and Cases 3B to 6B are Comparative Examples.

### [Case 1B]

0.015 g of dibutyltin dilaurate and 16.6 g of isophorone diisocyanate (NCO content: 37.8% by mass) were added to 150 g of the polyether compound a-1 in a composition containing the polyether compound a-1 obtained in Case 1, a TBA-DMC catalyst, and a stabilizer, and reacted at 80°C for 2 hours. It should be noted that a molar ratio (NCO/OH) of the amount of isocyanate in isophorone diisocyanate with respect to the amount of hydroxyl groups in the polyether compound a-1 was set to 2.0. The reaction was terminated when it was confirmed that the NCO content of the obtained polyether compound B-1 having a urethane bond reached a theoretical value of about 1.9% by mass. The isocyanate group content and viscosity of the obtained polyether compound B-1 having a urethane bond are shown in Table 7 (hereinafter, Cases 2B to 6B are also shown in the same manner). A filterability test was conducted using the obtained polyether compound B-1 having a urethane bond. The results are shown in Table 7 (hereinafter, Cases 2B to 6B are also shown in the same manner).

### [Case 2B]

A polyether compound B-2 having a urethane bond was obtained in the same manner as in Case 1B, with the exception that a composition containing the polyether compound a-2 obtained in Case 2, a TBA-DMC catalyst, and a stabilizer was used instead of the composition containing the polyether compound a-1, a TBA-DMC catalyst, and a stabilizer.

### [Case 3B]

A polyether compound B-3 having a urethane bond was obtained in the same manner as in Case 1B, with the exception that a composition containing the polyether compound a-3 obtained in Case 3, a TBA-DMC catalyst, and a stabilizer was used instead of the composition containing the polyether compound a-1, a TBA-DMC catalyst, and a stabilizer.

### [Case 4B]

A polyether compound B-4 having a urethane bond was obtained in the same manner as in Case 1B, with the exception that a composition containing the polyether compound a-4 obtained in Case 4, a TBA-DMC catalyst, and a stabilizer was used instead of the composition containing the polyether compound a-1, a TBA-DMC catalyst, and a stabilizer.

### [Case 5B]

A polyether compound B-5 having a urethane bond was obtained in the same manner as in Case 1B, with the exception that a composition containing the polyether compound a-5 obtained in Case 5, a TBA-DMC catalyst, and a stabilizer was used instead of the composition containing the polyether compound a-1, a TBA-DMC catalyst, and a stabilizer.

### [Case 6]

A polyether compound B-6 having a urethane bond was obtained in the same manner as in Case 1B, with the exception that a composition containing the polyether compound a-6 obtained in Case 6, a TBA-DMC catalyst, and a stabilizer was used instead of the composition containing the polyether compound a-1, a TBA-DMC catalyst, and a stabilizer.

**[Table 7]**

| | | Case 1B | Case 2B | Case 3B | Case 4B | Case 5B | Case 6B |
|---|---|---|---|---|---|---|---|
| Polyether compound having a urethane bond | | B-1 | B-2 | B-3 | B-4 | B-5 | B-6 |
| NCO amount | % by mass | 1.83 | 1.82 | 1.78 | 1.75 | 1.76 | 1.79 |
| Viscosity | mPa·s/25°C | 7600 | 7800 | 8500 | 8400 | 8500 | 8300 |
| Filterability | g | 2.91 | 4.94 | 1.33 | 1.49 | 1.77 | 1.98 |

As shown in Table 7, it was found that filterability was improved in Cases 1B and 2B compared to Cases 3B to 6B. It should be noted that in Cases 1B to 6B, the d₅₀ in the compositions (reaction liquids) containing the polyether compound, a TBA-DMC catalyst, and a stabilizer was more or less the same (if anything, the d₅₀ in Cases 4 to 6 was slightly smaller than the d₅₀ in Cases 1 and 2), and it was found that most of the particles were extremely small. In addition, since the TBA-DMC catalyst does not contribute to the urethanization reaction, the particle diameter in the reaction liquid during the production of the polyether compound having a urethane bond is also considered to be of the same order of magnitude. Further, this d₅₀ is extremely small compared to the pore size of the filter paper (5.0 µm). That is, it is an unexpected effect that the filterability differs while having similar levels of d₅₀. It is considered that the difference in filterability is due to the peak particle diameter and d₅₀' within the range of 0.1 to 6.5 µm based on the trace components in the reaction liquid. On the other hand, in Cases 1B and 2B and Cases 3B to 6B, the difference in the peak particle diameter and d₅₀' within the range of 0.1 to 6.5 µm in the composition (reaction liquid) containing the polyether compound, a TBA-DMC catalyst, and a stabilizer is a small difference, and it is an unexpected effect that such a small difference causes a difference in filterability. Further, it was found that in order to control the peak particle diameter and d₅₀' within the range of 0.1 to 6.5 µm, it is effective to adjust the D₅₀ of the TBA-DMC catalyst before the polymerization reaction and the content of particles having a particle diameter of 11 µm or more with respect to the total volume of the TBA-DMC catalyst before the polymerization reaction. Furthermore, the Mw/Mn of the polyether compounds a-1 and a-2 is smaller than the Mw/Mn of the polyether compounds a-3 to a-6. Therefore, it is considered possible that the Mw/Mn of the polyether compounds B-1 and B-2 having a urethane bond is also smaller than the Mw/Mn of the polyether compounds B-3 to B-6 having a urethane bond, and it is considered that this small Mw/Mn also contributes to the improvement of filterability.

### <Polyether compound having polymerizable unsaturated group>

In the following, Cases 1C and 2C are Examples of the present invention, and Cases 3C to 6C are Comparative Examples.

### [Case 1C]

0.015 g of dibutyltin dilaurate and 10.3 g of 2-isocyanatoethyl acrylate (NCO content: 29.8% by mass) were added to 150 g of the polyether compound a-1 in a composition containing the polyether compound a-1 obtained in Case 1, a TBA-DMC catalyst, and a stabilizer, and reacted at 80°C for 2 hours. It should be noted that a molar ratio (NCO/OH) of the amount of isocyanate in 2-isocyanatoethyl acrylate with respect to the amount of hydroxyl groups in the polyether compound a-1 was set to 0.97. The reaction was terminated when it was confirmed by IR that there was no absorption due to NCO. The Mn, Mw, Mw/Mn, and viscosity of the obtained polyether compound C-1 having a polymerizable unsaturated group are shown in Table 8 (hereinafter, Cases 2C to 6C are also shown in the same manner). A filterability test was conducted using the obtained polyether compound C-1 having a polymerizable unsaturated group. The results are shown in Table 8 (hereinafter, Cases 2C to 6C are also shown in the same manner).

### [Case 2C]

A polyether compound C-2 having a polymerizable unsaturated group was obtained in the same manner as in Case 1C, with the exception that a composition containing the polyether compound a-2 obtained in Case 2, a TBA-DMC catalyst, and a stabilizer was used instead of the composition containing the polyether compound a-1, a TBA-DMC catalyst, and a stabilizer.

### [Case 3C]

A polyether compound C-3 having a polymerizable unsaturated group was obtained in the same manner as in Case 1C, with the exception that a composition containing the polyether compound a-3 obtained in Case 3, a TBA-DMC catalyst, and a stabilizer was used instead of the composition containing the polyether compound a-1, a TBA-DMC catalyst, and a stabilizer.

### [Case 4C]

A polyether compound C-4 having a polymerizable unsaturated group was obtained in the same manner as in Case 1C, with the exception that a composition containing the polyether compound a-4 obtained in Case 4, a TBA-DMC catalyst, and a stabilizer was used instead of the composition containing the polyether compound a-1, a TBA-DMC catalyst, and a stabilizer.

### [Case 5C]

A polyether compound C-5 having a polymerizable unsaturated group was obtained in the same manner as in Case 1C, with the exception that a composition containing the polyether compound a-5 obtained in Case 5, a TBA-DMC catalyst, and a stabilizer was used instead of the composition containing the polyether compound a-1, a TBA-DMC catalyst, and a stabilizer.

### [Case 6C]

A polyether compound C-6 having a polymerizable unsaturated group was obtained in the same manner as in Case 1C, with the exception that a composition containing the polyether compound a-6 obtained in Case 6, a TBA-DMC catalyst, and a stabilizer was used instead of the composition containing the polyether compound a-1, a TBA-DMC catalyst, and a stabilizer.

**[Table 8]**

| | | Case 1C | Case 2C | Case 3C | Case 4C | Case 5C | Case 6C |
|---|---|---|---|---|---|---|---|
| Polyether compound having a polymerizable unsaturated group | | C-1 | C-2 | C-3 | C-4 | C-5 | C-6 |
| Mn | - | 6100 | 6000 | 6100 | 6000 | 6100 | 6100 |
| Mw | - | 6400 | 6300 | 6500 | 6400 | 6500 | 6500 |
| Mw/Mn | - | 1.049 | 1.060 | 1.066 | 1.065 | 1.070 | 1.068 |
| Viscosity | mPa·s/25°C | 1800 | 1800 | 1900 | 1900 | 1800 | 1800 |
| Filterability | g | 3.2 | 9.0 | 1.5 | 2.1 | 2.2 | 2.3 |

As shown in Table 8, it was found that filterability was improved in Cases 1C and 2C compared to Cases 3C to 6C. It should be noted that in Cases 1C to 6C, the d₅₀ in the compositions (reaction liquids) containing the polyether compound, a TBA-DMC catalyst, and a stabilizer was more or less the same (if anything, the d₅₀ in Cases 4 to 6 was slightly smaller than the d₅₀ in Cases 1 and 2), and it was found that most of the particles were extremely small. In addition, since the TBA-DMC catalyst does not contribute to the urethanization reaction, the particle diameter in the reaction liquid during the production of the polyether compound having a urethane bond is also considered to be of the same order of magnitude. Further, this d₅₀ is extremely small compared to the pore size of the filter paper (5.0 µm). That is, it is an unexpected effect that the filterability differs while having similar levels of d₅₀. It is considered that the difference in filterability is due to the peak particle diameter and d₅₀' within the range of 0.1 to 6.5 µm based on the trace components in the reaction liquid. On the other hand, in Cases 1C and 2C and Cases 3C to 6C, the difference in the peak particle diameter and d₅₀' within the range of 0.1 to 6.5 µm in the composition (reaction liquid) containing the polyether compound, a TBA-DMC catalyst, and a stabilizer is a small difference, and it is an unexpected effect that such a small difference causes a difference in filterability. Further, it was found that in order to control the peak particle diameter and d₅₀' within the range of 0.1 to 6.5 µm, it is effective to adjust the D₅₀ of the TBA-DMC catalyst before polymerization and the content of particles having a particle diameter of 11 µm or more with respect to the total volume of the TBA-DMC catalyst before polymerization. Furthermore, the Mw/Mn of the polyether compounds C-1 and C-2 having a polymerizable unsaturated group is smaller than the Mw/Mn of the polyether compounds C-3 to C-6 having a polymerizable unsaturated group, and it was thought that this small Mw/Mn also contributed to the improvement of filterability.

### INDUSTRIAL APPLICABILITY

When the double metal cyanide complex catalyst of the present invention is used, since the filterability of the obtained polyether compound, polyether compound having a reactive silicon group, polyether compound having a urethane bond, and polyether compound having a polymerizable unsaturated group is increased, it is highly industrially applicable.

## Claims

1. A double metal cyanide complex catalyst in a form of particles,
wherein a 50% cumulative volume particle diameter in said double metal cyanide complex catalyst determined from a volume-based cumulative particle size distribution obtained by a laser diffraction scattering method is from 0.01 to 4.0 µm, and
an amount of said particles having a particle diameter of 11 µm or more with respect to a total volume of said double metal cyanide complex catalyst is 10% by volume or less.

2. The double metal cyanide complex catalyst according to Claim 1,
wherein the amount of said particles having a particle diameter of 11 µm or more with respect to the total volume of said double metal cyanide complex catalyst is 5% by volume or less.

3. A method for producing a polyether compound,
the method comprising
polymerizing an alkylene oxide with an initiator having active hydrogen in the presence of the double metal cyanide complex catalyst according to Claim 1 or 2.

4. The method for producing a polyether compound according to Claim 3,
wherein a number average molecular weight of said polyether compound is from 500 to 100,000.

5. The method for producing a polyether compound according to Claim 3 or 4, wherein a molecular weight distribution of said polyether compound is from 1.00 to 1.15.

6. The method for producing a polyether compound according to any one of Claims 3 to 5,
wherein a total degree of unsaturation of said polyether compound is from 0.001 to 0.040 meq/g.

7. The method for producing a polyether compound according to any one of Claims 3 to 6,
wherein an amount of said double metal cyanide complex catalyst used with respect to a total mass of said polyether compound is from 1 to 200 ppm by mass.

8. A method for producing a polyether compound having a reactive silicon group, the method comprising
obtaining a composition containing a polyether compound by the method for producing a polyether compound according to any one of Claims 3 to 7, and
converting a hydroxyl group of said polyether compound in said composition into a group having a reactive silicon group represented by the following Formula 1,
-SiRₐX₃₋ₐ Formula 1
wherein R is a monovalent organic group having 1 to 20 carbon atoms and represents an organic group other than a hydrolyzable group, and X represents a hydroxyl group, a halogen atom, or a hydrolyzable group;
a is an integer from 0 to 2;
when a is 2, R groups may be the same as or different from each other, and when a is 0 or 1, X groups may be the same as or different from each other.

9. A method for producing a polyether compound having a urethane bond,
the method comprising
obtaining a composition containing a polyether compound by the method for producing a polyether compound according to any one of Claims 3 to 7, and
reacting said polyether compound in the obtained composition with a polyisocyanate.

10. A method for producing a polyether compound having a polymerizable unsaturated group,
the method comprising
obtaining a composition containing a polyether compound by the method for producing a polyether compound according to any one of Claims 3 to 7, and
converting a hydroxyl group of said polyether compound in said composition into a group having a polymerizable unsaturated group.
